(19) Europäisches Patentamt
European Patent Office
Office européen des brevets

(11) EP 4 521 623 A1

(12) **EUROPEAN PATENT APPLICATION**
published in accordance with Art. 153(4) EPC

(43) Date of publication:
**12.03.2025   Bulletin 2025/11**

(51) International Patent Classification (IPC):
*H02M 3/335* (2006.01)      *H02M 3/28* (2006.01)

(21) Application number: 23818894.0

(52) Cooperative Patent Classification (CPC):
H02M 1/088; H02M 3/28; H02M 3/335

(22) Date of filing: **15.05.2023**

(86) International application number:
**PCT/CN2023/094248**

(87) International publication number:
**WO 2023/236729 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **06.06.2022   CN 202210631000**

(71) Applicant: **Huawei Technologies Co., Ltd.
Shenzhen, Guangdong 518129 (CN)**

(72) Inventors:
• **ZHU, Yongfa
Shenzhen, Guangdong 518129 (CN)**

• **ZENG, Zhiqiang
Shenzhen, Guangdong 518129 (CN)**
• **DENG, Xiangyuan
Shenzhen, Guangdong 518129 (CN)**
• **CAI, Jinsen
Shenzhen, Guangdong 518129 (CN)**
• **LI, Benhu
Shenzhen, Guangdong 518129 (CN)**
• **CHEN, Haitao
Shenzhen, Guangdong 518129 (CN)**
• **JIANG, Chengfeng
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **CONVERTER AND ELECTRONIC DEVICE**

(57)    This application provides a converter and an electronic device. The converter includes: an input terminal, a first inverter circuit, a first transformer, a first rectifier circuit, and an output terminal. The first transformer includes a first primary-side winding and a first secondary-side winding. The input terminal is connected to a first terminal of the first inverter circuit, a second terminal of the first inverter circuit is connected to the first primary-side winding, and the first rectifier circuit is connected between the first secondary-side winding and the output terminal. A third terminal of the first inverter circuit is connected to the output terminal, or a third terminal of the first inverter circuit is connected to the first secondary-side winding. In this application, a loss of the converter can be reduced.

[FIG. 4a]

Processed by Luminess, 75001 PARIS (FR)

## Description

This application claims priority to Chinese Patent Application No. 202210631000.6, filed with the China National Intellectual Property Administration on June 6, 2022 and entitled "CONVERTER AND ELECTRONIC DEVICE", which is incorporated herein by reference in its entirety.

## TECHNICAL FIELD

This application relates to the field of electronic circuit technologies, and in particular, to a converter and an electronic device.

## BACKGROUND

A link on which an electronic device supplies power to each electric device inside the electronic device usually includes a primary power supply, a secondary power supply, and a tertiary power supply. The primary power supply is externally connected to a power grid mains supply, and converts the power grid mains supply into a direct current with a nominal value of 48 V. The secondary power supply and the tertiary power supply are configured to convert the direct current of 48 V into a direct current of 5 V, 12 V, 0.57 V, or the like to supply power to a load. The secondary power supply or the tertiary power supply may be usually referred to as a converter.

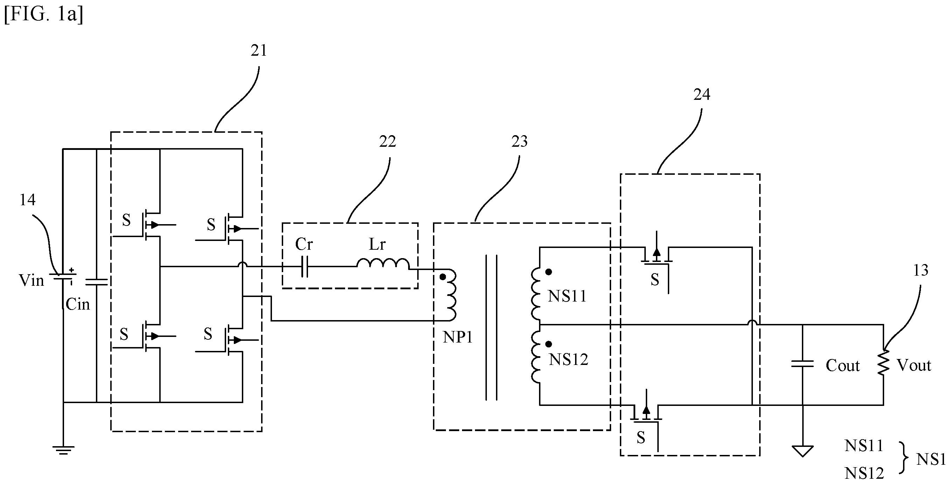

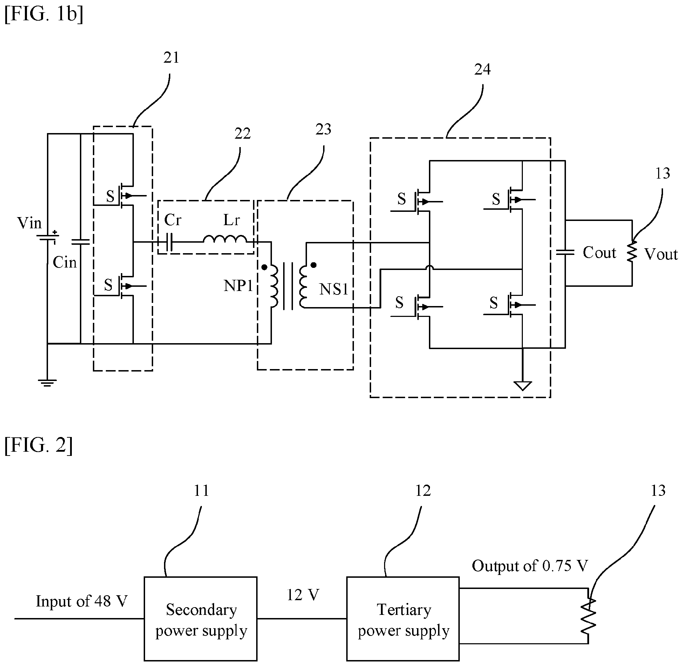

In a related technology, as shown in FIG. 1, the converter may be a full-bridge logical link control (Logical Link Control, LLC) converter. Specifically, the converter includes an input capacitor, an inverter circuit, a resonant circuit, an isolation transformer, a rectifier circuit, and an output capacitor, where the input capacitor is separately connected to an input power supply and the inverter circuit in parallel, the inverter circuit is connected to the resonant circuit, the resonant circuit is connected to one terminal of a primary-side winding in the isolation transformer, and another terminal of the primary-side winding is connected to the inverter circuit. One terminal of a first secondary-side winding is connected to one terminal of a second secondary-side winding and is connected to the output capacitor and a load, and another terminal of the first secondary-side winding and another terminal of the second secondary-side winding are separately connected to the rectifier circuit.

When a specific conversion ratio needs to be implemented, a quantity of turns of the primary-side winding in the isolation transformer is large, and a resistance value of the primary-side winding is high. Therefore, a loss of the isolation transformer is also high, and efficiency of the converter is low.

## SUMMARY

To resolve the foregoing technical problem, this application provides a converter and an electronic device, to reduce a loss of the converter.

This application provides a converter. The converter includes: an input terminal, a first inverter circuit, a first transformer, a first rectifier circuit, and an output terminal. The first transformer includes a first primary-side winding and a first secondary-side winding. The input terminal is connected to a first terminal of the first inverter circuit, a second terminal of the first inverter circuit is connected to the first primary-side winding, and the first rectifier circuit is connected between the first secondary-side winding and the output terminal. A third terminal of the first inverter circuit is connected to the output terminal; or a third terminal of the first inverter circuit is connected to the first secondary-side winding.

In the converter in this application, when the third terminal of the first inverter circuit is connected to the output terminal, in a current of a load, for a part of the current, a direct current is converted by the first inverter into an alternating current. After the alternating current is processed by the first transformer, energy is transferred from the first primary-side winding to the first secondary-side winding in a magnetic field coupling manner, and then the alternating current is converted by the first rectifier circuit into a direct current, to supply power to the load. The other part of the current is directly transferred from the first inverter circuit to the load. Therefore, the first transformer does not need to process the part of the current that is directly transferred from the first inverter circuit to the load, to reduce a power that needs to be processed by the first transformer, and improve conversion efficiency of the converter. In addition, because the power that needs to be processed by the first transformer is reduced, a quantity of turns of the first primary-side winding in the first transformer can be reduced, and a resistance value of the first primary-side winding can be reduced, to reduce a loss of the first transformer and further improve the conversion efficiency of the converter.

When the third terminal of the first inverter circuit is connected to the first secondary-side winding, in a current of a load, for a part of the current, a direct current is converted by the first inverter into an alternating current. After the alternating current is processed by the first transformer, energy is transferred from the first primary-side winding to the first secondary-side winding in a magnetic field coupling manner, and then the alternating current is converted by the first rectifier circuit into a direct current, to supply power to the load. The other part of the current is transferred from the first inverter circuit to the first secondary-side winding and then transferred to the load. Therefore, the first transformer does not need to process the part of the current that is directly transferred from the first inverter circuit to the first secondary-side winding and then transferred to the load, to reduce a power that needs to be processed by the first transformer, and improve conversion efficiency of the converter. In addition, because the power that needs to be processed by the first transformer is reduced, a quantity of turns of the first primary-side winding in the first transformer can be reduced, and a resistance value of the first primary-side winding can be reduced, to reduce a loss of the first transformer and further improve the conversion efficiency of the converter.

In some possible implementations, the second terminal of the first inverter circuit is connected to a first terminal of the first primary-side winding, a second terminal of the first primary-side winding is connected to a first terminal of the first secondary-side winding and is connected to the first rectifier circuit, and a second terminal of the first secondary-side winding is connected to the first rectifier circuit.

In this way, when the third terminal of the first inverter circuit is connected to the output terminal, in a current of the load, for a part of the current, a direct current is converted by the first inverter into an alternating current. After the alternating current is processed by the first transformer, energy is transferred from the first primary-side winding to the first secondary-side winding in the magnetic field coupling manner, and then the alternating current is converted by the first rectifier circuit into a direct current, to supply power to the load. The other part of the current is directly transferred from the first primary-side winding to the first secondary-side winding through a connection cable between the first primary-side winding and the first secondary-side winding. In a second half cycle, in a current of the load, for a part of the current, a direct current is converted by the first inverter into an alternating current. After the alternating current is processed by the first transformer, energy is transferred from the first primary-side winding to the first secondary-side winding in the magnetic field coupling (isolation) manner, and then the alternating current is converted by the first rectifier circuit into a direct current, to supply power to the load. The other part of the current is directly transferred from a second electrode of a second switching transistor to the load through a cable. Therefore, the first transformer does not need to process the part of the current that is directly transferred from the first primary-side winding to the first secondary-side winding and the part of the current that is directly transferred from the second electrode of the second switching transistor to the load, to reduce a power that needs to be processed by the first transformer, and improve conversion efficiency of the converter.

When the third terminal of the first inverter circuit is connected to the first secondary-side winding, in a first half cycle, in a current of the load, for a part of the current, a direct current is converted by the first inverter into an alternating current. After the alternating current is processed by the first transformer, energy is transferred from the first primary-side winding to a second secondary-side sub-winding in the magnetic field coupling manner, and then the alternating current is converted by the first rectifier circuit into a direct current, to supply power to the load. The other part of the current is directly transferred from the first primary -side winding to a first secondary-side sub-winding through a connection cable between the first primary-side winding and the first secondary-side sub-winding. In a second half cycle, in a current of the load, for a part of the current, a direct current is converted by the first inverter into an alternating current. After the alternating current is processed by the first transformer, energy is transferred from the first primary-side winding to the first secondary-side sub-winding in the magnetic field coupling manner, and then the alternating current is converted by the first rectifier circuit into a direct current, to supply power to the load. The other part of the current is directly transferred from a second electrode of a second switching transistor to the second secondary-side sub-winding through a cable. Therefore, the first transformer does not need to process the part of the current that is directly transferred from the first primary-side winding to the first secondary-side sub-winding and the part of the current that is directly transferred from the second electrode of the second switching transistor to the load, to reduce a power that needs to be processed by the first transformer, and improve conversion efficiency of the converter.

In some possible implementations, the first terminal of the first primary-side winding and the first terminal of the first secondary-side winding are mutually dotted terminals, and the second terminal of the first primary-side winding and the second terminal of the first secondary-side winding are mutually dotted terminals. A dotted terminal of the first primary-side winding is connected to an undotted terminal of the first secondary-side winding, or an undotted terminal of the first primary-side winding is connected to a dotted terminal of the first secondary-side winding. In this way, the first transformer may be a non-isolation transformer. Because the non-isolation transformer occupies a small volume, in this solution, a volume of the first transformer can be reduced, to reduce a volume of the converter and further improve a power density of the converter.

In some possible implementations, the third terminal of the first inverter circuit is connected to the second terminal of the first secondary-side winding. In this way, in a current of the load, a part of the current may be transferred from the first inverter circuit to the second terminal of the first secondary-side winding and then transferred to the load without being induced by the first primary-side winding to the first secondary-side winding, that is, without being processed by the first transformer, so that conversion efficiency of the converter can be improved.

In some possible implementations, the first secondary-side winding includes a first secondary-side sub-winding and a second secondary-side sub-winding that are connected in series, a first terminal of the first secondary-side sub-winding is the first terminal of the first secondary-side winding, a second terminal of the first secondary-side sub-winding is connected to a first terminal of the second secondary-side sub-winding and is connected to the output terminal, and a second terminal of the second secondary-side sub-winding is the second terminal of the first secondary-side winding. In this way, when the third terminal of the first inverter circuit is connected to the second terminal of the second secondary-side sub-winding, in a first half cycle, in a current of the load, for a part of the current, a direct current is converted by the first inverter into an alternating current. After the alternating current is processed by the first transformer, energy is transferred from the first primary-side winding to the second secondary-side sub-winding in the magnetic field coupling manner, and then the alternating current is converted by the first rectifier circuit into a direct current, to supply power to the load. The other part of the current is directly transferred from the first primary-side winding to a first secondary-side sub-winding through a connection cable between the first primary-side winding and the first secondary-side sub-winding. In a second half cycle, in a current of the load, for a part of the current, a direct current is converted by the first inverter into an alternating current. After the alternating current is processed by the first transformer, energy is transferred from the first primary-side winding to the first secondary-side sub-winding in the magnetic field coupling manner, and then the alternating current is converted by the first rectifier circuit into a direct current, to supply power to the load. The other part of the current is directly transferred from the first inverter circuit to the second secondary-side sub-winding through a cable. Therefore, the first transformer does not need to process the part of the current that is directly transferred from the first primary-side winding to the first secondary-side sub-winding and the part of the current that is directly transferred from the second electrode of the second switching transistor to the load, to reduce a power that needs to be processed by the first transformer, and improve conversion efficiency of the converter.

In some possible implementations, a quantity of turns of the first secondary-side sub-winding is the same as a quantity of turns of the second secondary-side sub-winding. In this way, it can be further ensured that currents of various switching transistors in the first rectifier circuit and/or a second rectifier circuit are the same.

In some possible implementations, the converter further includes a second inverter circuit and a second transformer, the second transformer includes a second primary-side winding and a second secondary-side winding, a first terminal of the second primary-side winding is connected to a second terminal of the second secondary-side winding, and the second secondary-side winding and the first secondary-side winding are connected in parallel, the input terminal is connected to a first terminal of the second inverter circuit, and a second terminal of the second inverter circuit is connected to a second terminal of the second primary-side winding; and a third terminal of the second inverter circuit is connected to the output terminal, or a third terminal of the second inverter circuit is connected to a first terminal of the second secondary-side winding. Because the input terminal is connected to the first terminal of the first inverter circuit, and the input terminal is further connected to the first terminal of the second inverter circuit, the first terminal of the first inverter circuit is connected to the first terminal of the second inverter circuit. The second terminal of the first primary-side winding is connected to the first terminal of the first secondary-side winding, the first terminal of the second primary-side winding is connected to the second terminal of the second secondary-side winding, and the first secondary-side winding and the second secondary-side winding are connected in parallel, so that currents of various switching transistors in the first rectifier circuit can be the same.

In some possible implementations, the converter further includes a second rectifier circuit, the second rectifier circuit is connected between the second transformer and the output terminal, and the second rectifier circuit and the first rectifier circuit are connected in parallel. Both the first rectifier circuit and the second rectifier circuit each include a plurality of switching transistors, so that currents of various switching transistors in the first rectifier circuit and the second rectifier circuit can also be the same.

In some possible implementations, the converter further comprises a second inverter circuit and a second transformer, the second transformer comprises a second primary-side winding, and a first terminal of the second primary-side winding is connected to the second terminal of the first secondary-side winding, the input terminal is connected to a first terminal of the second inverter circuit, and a second terminal of the second inverter circuit is connected to a second terminal of the second primary-side winding; and a third terminal of the second inverter circuit is connected to the output terminal, or a third terminal of the second inverter circuit is connected to the first terminal of the first secondary-side winding. Because the input terminal is connected to the first terminal of the first inverter circuit, and the input terminal is further connected to the first terminal of the second inverter circuit, the first terminal of the first inverter circuit is connected to the first terminal of the second inverter circuit. The second terminal of the first primary-side winding is connected to the first terminal of the first secondary-side winding, and the first terminal of the second primary-side winding is connected to the second terminal of the first secondary-side winding, so that currents of various switching transistors in the first rectifier circuit can be the same.

In some possible implementations, the converter further includes a second rectifier circuit, the second rectifier circuit is separately connected to the first terminal of the second primary-side winding and the first terminal of the first secondary-side winding, the second rectifier circuit is further connected to the output terminal, and the second rectifier circuit and the first rectifier circuit are connected in parallel. Both the first rectifier circuit and the second rectifier circuit each include a plurality of switching transistors, so that currents of various switching transistors in the first rectifier circuit and the second rectifier circuit can also be the same.

In some possible implementations, the second secondary-side winding includes a third secondary-side sub-winding and a fourth secondary-side sub-winding that are connected in series, a first terminal of the third secondary-side sub-winding is the first terminal of the second secondary-side winding, a second terminal of the third secondary-side sub-winding is connected to a first terminal of the fourth secondary-side sub-winding and is connected to the output terminal, and a second terminal of the fourth secondary-side sub-winding is the second terminal of the second secondary-side winding. In this way, when the third terminal of the second inverter circuit is connected to the second terminal of the fourth secondary-side sub-winding, in a first half cycle, in a current of the load, for a part of the current, a direct current is converted by the second inverter into an alternating current. After the alternating current is processed by the second transformer, energy is transferred from the second primary-side winding to the fourth secondary-side sub-winding in the magnetic field coupling manner, and then the alternating current is converted by the second rectifier circuit into a direct current, to supply power to the load. The other part of the current is directly transferred from the second primary-side winding to the third secondary-side sub-winding through a connection cable between the second primary-side winding and the third secondary-side sub-winding. In a second half cycle, in a current of the load, for a part of the current, a direct current is converted by the second inverter into an alternating current. After the alternating current is processed by the second transformer, energy is transferred from the second primary -side winding to the third secondary-side sub-winding in the magnetic field coupling manner, and then the alternating current is converted by the second rectifier circuit into a direct current, to supply power to the load. The other part of the current is directly transferred from the second inverter circuit to the fourth secondary-side sub-winding through a cable. Therefore, the second transformer does not need to process the part of the current that is directly transferred from the second primary-side winding to the third secondary-side sub-winding and the part of the current that is directly transferred from the second inverter circuit to the load, to reduce a power that needs to be processed by the second transformer, and improve conversion efficiency of the converter.

In some possible implementations, a quantity of turns of the third secondary-side sub-winding is the same as a quantity of turns of the fourth secondary-side sub-winding. In this way, it can be further ensured that currents of various switching transistors in the first rectifier circuit and/or the second rectifier circuit are the same.

In some possible implementations, the converter further includes a first resonant circuit and a second resonant circuit, the first resonant circuit is connected between the first inverter circuit and the first rectifier circuit, and the second resonant circuit is connected between the second inverter circuit and the second rectifier circuit; and the first resonant circuit includes a first capacitor and a first inductor that are connected in series, the second resonant circuit includes a second capacitor and a second inductor that are connected in series, and the first inductor is positively coupled to the second inductor. Because both the first inductor and the second inductor have a processing error during actual application, a current in the first resonant circuit is different from a current in the second resonant circuit, and a difference is large, that is, a problem of two-phase current imbalance occurs. Therefore, when the first inductor is positively coupled to the second inductor, mutual inductance can be generated between the first inductor and the second inductor cell, so that two-phase current imbalance can be well controlled.

In some possible implementations, the converter further includes a third transformer, the third transformer includes a third primary-side winding and a third secondary-side winding, the third primary-side winding is negatively coupled to the third secondary-side winding, the third primary-side winding is connected between the first inverter circuit and the first rectifier circuit, and the third secondary-side winding is connected between the second inverter circuit and the second rectifier circuit. Because the first inductor, the second inductor, the first capacitor, and the second capacitor all have a processing error during actual application, the current in the first resonant circuit is different from the current in the second resonant circuit, and the difference is large, that is, the problem of two-phase current imbalance occurs. Therefore, when the third primary-side winding is negatively coupled to the third secondary-side winding, mutual feedback and adjustment can be performed between the third primary-side winding and the third secondary-side winding, so that currents of the third primary-side winding and the third secondary-side winding are gradually close, and two-phase current imbalance can be well controlled.

In some possible implementations, a quantity of turns of the first primary-side winding is greater than or equal to 0. When the quantity of turns of the first primary-side winding is greater than 0, the first transformer includes the first primary-side winding and the first secondary-side winding; or when the quantity of turns of the first primary-side winding is equal to 0, the first transformer includes the first secondary-side winding. It can be learned that both the first transformer having the first primary-side winding and the first transformer having no first primary-side winding are applicable to the converter in this application.

This application further provides an electronic device, including any one of the foregoing converters. The electronic device can achieve all effects of the converter.

## BRIEF DESCRIPTION OF DRAWINGS

To describe the technical solutions in embodiments of this application more clearly, the following briefly introduces the accompanying drawings for describing embodiments of this application. Apparently, the accompanying drawings in the following descriptions show merely some embodiments of this application, and a person of ordinary skill in the art may still derive other drawings from these accompanying drawings without creative efforts.

FIG. 1a is a circuit schematic of a converter in a related technology;

FIG. 1b is a circuit schematic of a converter in another related technology;

FIG. 2 is a diagram of an application scenario of a secondary power supply and a tertiary power supply;

FIG. 3 is a circuit schematic of a converter in another related technology;

FIG. 4a is a circuit schematic of a converter according to an embodiment of this application;

FIG. 4b is a circuit schematic of a converter according to another embodiment of this application;

FIG. 5 is a diagram of a drive waveform of each switching transistor in the converter shown in FIG. 4a;

FIG. 6a is a diagram of a connection between a first primary-side winding and a first secondary-side winding in the converter shown in FIG. 4a;

FIG. 6b is a diagram of a connection between a first primary-side winding and a first secondary-side winding in the converter shown in FIG. 4b;

FIG. 7a is diagram of a working state and a current flow direction of each switching transistor in a first half cycle in the converter shown in FIG. 4a;

FIG. 7b is a diagram of a working state and a current flow direction of each switching transistor in a second half cycle in the converter shown in FIG. 4a;

FIG. 8a is a circuit schematic of two converters connected in parallel according to an embodiment of this application;

FIG. 8b is a circuit schematic of two converters connected in parallel according to another embodiment of this application;

FIG. 8c is a circuit schematic of two converters connected in parallel according to another embodiment of this application;

FIG. 8d is a circuit schematic of two converters connected in parallel according to another embodiment of this application;

FIG. 9a is a diagram of a drive waveform of each switching transistor in the converters shown in FIG. 8a and FIG. 8c;

FIG. 9b is a diagram of a drive waveform of each switching transistor in the converters shown in FIG. 8b and FIG. 8d;

FIG. 10 is a circuit schematic of a converter according to another embodiment of this application;

FIG. 11a is a circuit schematic of a converter according to another embodiment of this application;

FIG. 11b is a circuit schematic of a converter according to another embodiment of this application;

FIG. 12 is a diagram of a drive waveform of each switching transistor in the converter shown in FIG. 11a;

FIG. 13a is a diagram of a connection between a first primary-side winding and a first secondary-side winding in the converter shown in FIG. 11a;

FIG. 13b is a diagram of a connection between a first primary-side winding and a first secondary-side winding in the converter shown in FIG. 11b;

FIG. 14a is diagram of a working state and a current flow direction of each switching transistor in a first half cycle in the converter shown in FIG. 11a;

FIG. 14b is a diagram of a working state and a current flow direction of each switching transistor in a second half cycle in the converter shown in FIG. 11a;

FIG. 15a is a circuit schematic of two converters connected in parallel according to another embodiment of this application;

FIG. 15b is a circuit schematic of two converters connected in parallel according to another embodiment of this application;

FIG. 15c is a circuit schematic of two converters connected in parallel according to another embodiment of this application;

FIG. 15d is a circuit schematic of two converters connected in parallel according to another embodiment of this application;

FIG. 16a is a diagram of a drive waveform of each switching transistor in the converters shown in FIG. 15a and FIG. 15c;

FIG. 16b is a diagram of a drive waveform of each switching transistor in the converters shown in FIG. 15b and FIG. 15d;

FIG. 17 is a circuit schematic of a converter according to another embodiment of this application;

FIG. 18 is a circuit schematic of a converter according to another embodiment of this application;

FIG. 19a is a circuit schematic of a converter according to another embodiment of this application;

FIG. 19b is a circuit schematic of a converter according to another embodiment of this application;

FIG. 20a is diagram of a working state and a current flow direction of each switching transistor in a first half cycle in the converter shown in FIG. 19a;

FIG. 20b is a diagram of a working state and a current flow direction of each switching transistor in a second half cycle in the converter shown in FIG. 19a;

FIG. 21a is a circuit schematic of two converters connected in parallel according to another embodiment of this application;

FIG. 21b is a circuit schematic of two converters connected in parallel according to another embodiment of this application;

FIG. 21c is a circuit schematic of two converters connected in parallel according to another embodiment of this application;

FIG. 21d is a circuit schematic of two converters connected in parallel according to another embodiment of this application;

FIG. 22 is a circuit schematic of a converter according to another embodiment of this application;

FIG. 23 is a circuit schematic of a converter according to another embodiment of this application; and

FIG. 24 is a circuit schematic of a converter according to another embodiment of this application.

Reference numerals: 11-secondary power supply; 12-tertiary power supply; 13-load; 14-power supply; 21-inverter circuit; 22-resonant circuit; 23-isolation transformer; 24-rectifier circuit; 31-first inverter circuit; 32-first resonant circuit; 33-first transformer; 34-first rectifier circuit; 35-input terminal; 36-output terminal; 41-second inverter circuit; 42-second resonant circuit; 43-second transformer; 44-second rectifier circuit; and 53-third transformer.

## DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship between associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, a first target object, a second target object, and the like are used for distinguishing between different target objects, but are not used for describing a specific order of the target objects.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the descriptions of embodiments of this application, unless otherwise stated, "a plurality of" means two or more than two. For example, a plurality of processing units mean two or more processing units, and a plurality of systems mean two or more systems.

A link on which an electronic device, such as a switch, a base station device, or a mobile phone, supplies power to each electric device inside the electronic device usually includes a power supply and a load. The power supply includes a primary power supply, a secondary power supply, and a tertiary power supply. The primary power supply is externally connected to a power grid mains supply, and converts the power grid mains supply into a direct current with a nominal value of 48 V. The secondary power supply and the tertiary power supply are configured to convert the direct current of 48 V into a direct current of 5 V, 12 V, 0.57 V, or the like to supply power to the load. The load may be a device that consumes electricity, such as a chip.

As shown in FIG. 2, a primary power supply outputs a direct current of 48 V, and then a secondary power supply 11 converts the direct current of 48 V into a direct current of 12 V. Then, a tertiary power supply 12 converts the direct current of 12 V into a direct current of 0.75 V, and supplies the direct current of 0.75 V to a load 13. Both the secondary power supply 11 and the tertiary power supply 12 may be converters. In another embodiment, when a conversion ratio of the converter is large, only one converter may be disposed between the primary power supply and the load 13 to serve as the secondary power supply 11, and the tertiary power supply 13 is not required. It should be noted that the conversion ratio of the converter is a ratio of an output voltage to an input voltage of the converter.

In a related technology, as shown in FIG. 1a, a converter is a full-bridge LLC converter. Specifically, the converter includes an input capacitor Cin, an inverter circuit 21, a resonant circuit 22, an isolation transformer 23, a rectifier circuit 24, and an output capacitor Cout, where the input capacitor Cin is separately connected to a power supply 14 and the inverter circuit 21 in parallel, the inverter circuit 21 is connected to the resonant circuit 22, the resonant circuit 22 is connected to one terminal of a primary-side winding NP1 in the isolation transformer 23, and another terminal of the primary-side winding NP1 is connected to the inverter circuit 21. The inverter circuit 21 is a full-bridge circuit and includes four switching transistors S. The rectifier circuit 24 is a full-wave rectifier circuit, and includes two switching transistors S. The resonant circuit 22 includes a capacitor Cr and an inductor Lr. One terminal of a first secondary-side winding NS11 is connected to one terminal of a second secondary-side winding NS12 and is connected to the output capacitor Cout and a positive electrode of a load 13, and another terminal of the first secondary-side winding NS11 and another terminal of the second secondary-side winding NS12 are separately connected to the rectifier circuit 24. Both a negative electrode of the power supply 14 and one terminal of the load 13 are grounded, but the power supply 14 and the load 13 are not grounded together. Therefore, the full-bridge LLC converter is an isolation converter.

It can be learned from FIG. 1a that, a current of the load is a sum of a current that is on the first secondary-side winding NS11 and that is induced by the primary-side winding NP1 in the isolation transformer 23 and a current that is on the second secondary-side winding NS12 and that is induced by the primary-side winding NP1. It can be learned that, in this solution, a voltage provided by the power supply 14 needs to be all converted by the isolation transformer 23, and then supplied to the load 13. To be specific, when a large conversion ratio needs to be implemented, a quantity of turns of the primary-side winding NP1 in the isolation transformer 23 is large, and a resistance value of the primary-side winding NP1 increases. Therefore, a loss of the isolation transformer 23 also increases, and efficiency of the converter is reduced. In addition, the isolation transformer 23 has a larger volume, usually 25% of a volume of the converter, resulting in a low power density, that is, a low power provided per unit volume.

In another related technology, as shown in FIG. 1b, a converter is a half-bridge LLC converter. The half-bridge LLC converter shown in FIG. 1b includes an input capacitor Cin, an inverter circuit 21, a resonant circuit 22, an isolation transformer 23, a rectifier circuit 24, and an output capacitor Cout. The inverter circuit 21 is a half-bridge circuit, and includes two switching transistors S. The resonant circuit 22 includes a capacitor Cr and an inductor Lr. The isolation transformer 23 includes a primary-side winding NP1 and a secondary-side winding NS1. The rectifier circuit 24 is a full-bridge circuit, and includes four switching transistors S.

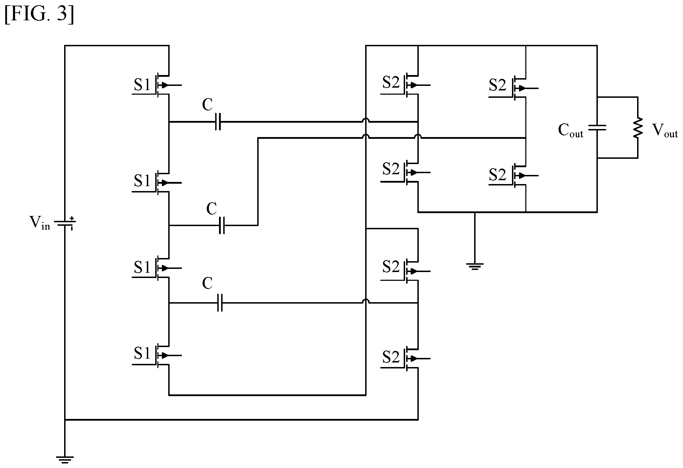

In another related technology, as shown in FIG. 3, a capacitor is a non-isolation switched-capacitor converter, and includes four switching transistors S1 connected in series, three capacitors C connected in parallel, and a rectifier circuit. The rectifier circuit includes six switching transistors S2. In this solution, no isolation transformer is disposed, and a plurality of first capacitors are used instead. Therefore, an overall height of the converter can be reduced. However, in this solution, a conversion ratio is mainly implemented by using the capacitor C. Therefore, the three capacitors C are all large capacitors, for example, capacitors of a model X7R are used. A disadvantage of the capacitor C is that a capacity of the capacitor C is greatly reduced under a bias voltage, and a capacitance value of a large capacitor continuously decreases due to impact of a temperature, the bias voltage, and the like during long-term working in a life cycle of the capacitor C. Consequently, efficiency of the capacitor is still very low.

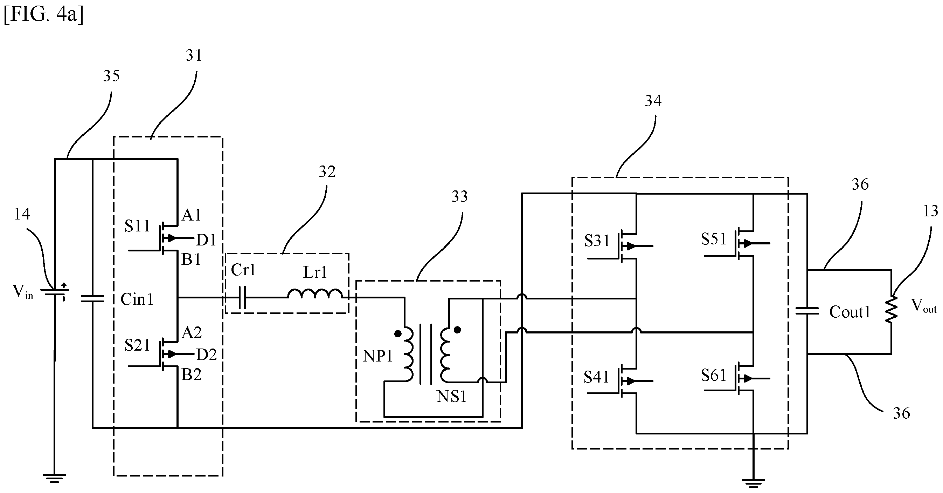

Based on this, as shown in FIG. 4a, an embodiment of this application provides a converter, including an input terminal 35, a first input capacitor Cin1, a first inverter circuit 31, a first resonant circuit 32, a first transformer 33, a first rectifier circuit 34, a first output capacitor Cout1, and two output terminals 36. The input terminal 35 is connected to a positive electrode of a power supply 14, the two output terminals 36 are respectively connected to two terminals of a load 13, and a negative electrode of the power supply 14 is grounded. One terminal of the first output capacitor Cout1 is grounded, and the negative electrode of the power supply 14 and one terminal of the first output capacitor Cout1 are grounded together. The power supply 14 may be a primary power supply.

As shown in FIG. 4a, one terminal of the first input capacitor Cin1 is connected to the input terminal 35, and another terminal of the first input capacitor Cin1 is connected to the first inverter circuit 31.

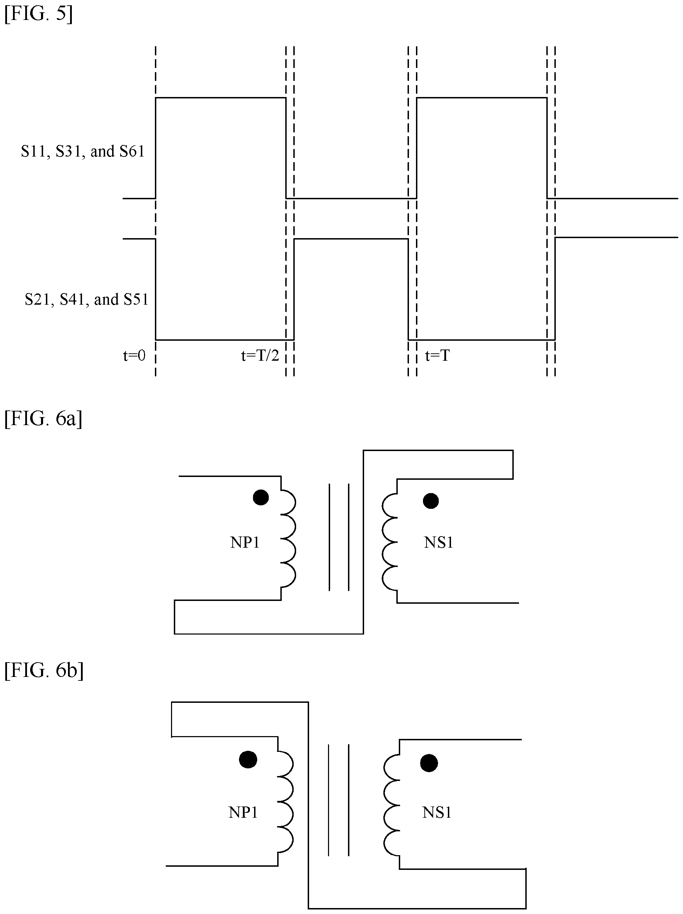

As shown in FIG. 4a, the first inverter circuit 31 is a half-bridge circuit, and includes a first switching transistor S11 and a second switching transistor S21 connected in series. Both the first switching transistor S11 and the second switching transistor S21 may be transistors. For example, both the first switching transistor S11 and the second switching transistor S21 may be metal-oxide-semiconductor (Metal Oxide Semiconductor, MOS) field effect transistors. The first switching transistor S11 has a first electrode A1, a second electrode B1, and a control electrode D1. The second switching transistor S21 has a first electrode A2, a second electrode B2, and a control electrode D2. The first electrodes A1 and A2 may be drain electrodes, and the second electrodes B1 and B2 may be source electrodes, or the first electrodes A1 and A2 may be source electrodes, and the second electrodes B1 and B2 are drain electrodes. Both the control electrode D1 of the first switching transistor S11 and the control electrode D2 of the second switching transistor S21 are connected to an external drive circuit, and the drive circuit may send a control signal to the control electrodes D1 and D2. A waveform diagram of the control signal may be shown in FIG. 5.

As shown in FIG. 4a, the first electrode A1 of the first switching transistor S11 is connected to one terminal of the first input capacitor Cinl, and is connected to the positive electrode of the power supply 14; the second electrode B1 of the first switching transistor S11 is connected to the first electrode A2 of the second switching transistor S21, and is connected to the first resonant circuit 32; and the second electrode B2 of the second switching transistor S21 is connected to the output terminal 36 of the converter through a cable.

It should be noted that, it can be learned from FIG. 4a, the first inverter circuit 31 includes a first terminal, a second terminal, and a third terminal, where the first terminal is the first electrode A1 of the first switching transistor S11, the second terminal is the second electrode B1 of the first switching transistor S11 or the first electrode A2 of the second switching transistor S21, and the third terminal is the second electrode B2 of the second switching transistor S21.

As shown in FIG. 4a, the first resonant circuit 32 includes a first capacitor Cr1 and a first inductor Lr1 connected in series. One terminal of the first capacitor Cr1 away from the first inductor Lr1 is separately connected to the second electrode B1 of the first switching transistor S11 and the first electrode A2 of the second switching transistor S21. One terminal of the first inductor Lr1 away from the first capacitor Cr1 is connected to a dotted terminal of a first primary-side winding NP1 in the first transformer 33.

As shown in FIG. 4a, the first transformer 33 includes the first primary-side winding NP1 and a first secondary-side winding NS1. A first terminal of the first primary-side winding NP1 is connected to the first inductor Lr1, a second terminal of the first primary-side winding NP1 is connected to a first terminal of the first secondary-side winding NS1 and is connected to the first rectifier circuit 34, and a second terminal of the first secondary-side winding NS1 is connected to the first rectifier circuit 34. The first terminal of the first primary-side winding NP1 and the first terminal of the first secondary-side winding NS1 are mutually dotted terminals, and the second terminal of the first primary-side winding NP1 and the second terminal of the first secondary-side winding NS1 are mutually dotted terminals. Therefore, the first terminal of the first primary-side winding NP1 and the second terminal of the first secondary-side winding NS1 are mutually undotted terminals, and the second terminal of the first primary-side winding NP1 and the first terminal of the first secondary-side winding NS1 are mutually undotted terminals.

It should be noted that, as shown in FIG. 4a, in this embodiment, the first resonant circuit 32 is connected between the second electrode B1 of the first switching transistor S11 and the dotted terminal of the first primary-side winding NP1, and the first capacitor Cr1 is connected to the second electrode B1 of the first switching transistor S11. In another embodiment, the first capacitor Cr1 and the first inductor Lr1 in the first resonant circuit 32 may be interchanged in positions, that is, the first inductor Lr1 is connected to the second electrode B1 of the first switching transistor S11, and the first capacitor Cr1 is connected to the dotted terminal of the first primary-side winding NP1. Alternatively, the first inductor Lr1 and the first capacitor Cr1 are connected in series between the first primary-side winding NP1 and the first secondary-side winding NS1. Alternatively, one of the first inductor Lr1 and the first capacitor Cr1 is connected in series between the first primary-side winding NP1 and the first secondary-side winding NS1, and the other of the first inductor Lr1 and the first capacitor Cr1 is connected in series between the second electrode B1 of the first switching transistor S11 and the first primary-side winding NP1. The first inductor Lr1 may be a discrete inductor, or may be a leakage inductor of the first transformer 33.

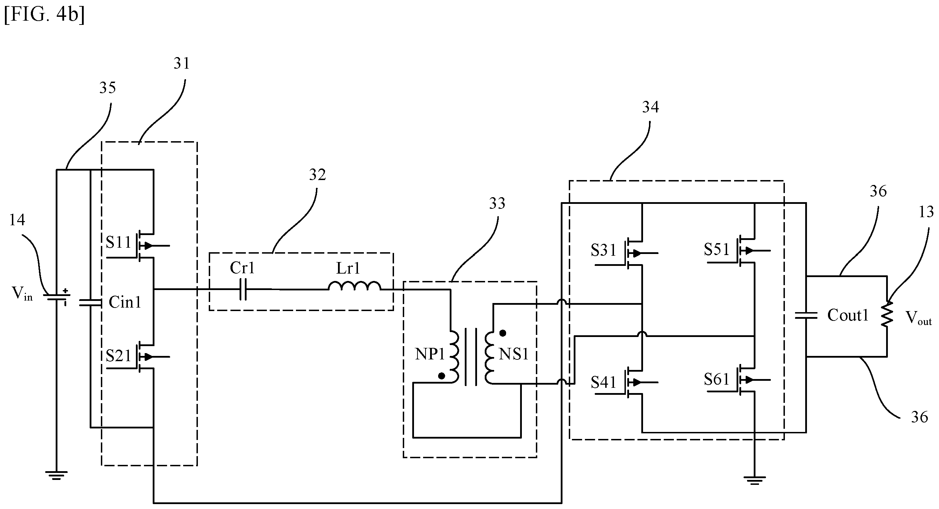

In this embodiment, the first primary-side winding NP1 and the first secondary-side winding NS1 may be connected in two manners. In a first manner, as shown in FIG. 6a, the undotted terminal of the first primary-side winding NP1 is connected to the dotted terminal of the first secondary-side winding NS1, where a terminal marked with a black dot is a dotted terminal, and a terminal not marked with a black dot is an undotted terminal. In a second manner, as shown in FIG. 6b, the dotted terminal of the first primary-side winding NP1 is connected to the undotted terminal of the first secondary-side winding NS1. The first primary-side winding NP1 and the first secondary-side winding NS1 in the first transformer 33 shown in FIG. 4a are connected in the manner shown in FIG. 6a, and the first primary-side winding NP1 and the first secondary-side winding NS1 in the first transformer 33 shown in FIG. 4b are connected in the manner shown in FIG. 6b. In addition, a difference between the converter shown in FIG. 4a and the converter shown in FIG. 4b lies only in the manner of the connection between the first primary-side winding NP1 and the first secondary-side winding NS1 in the first transformer 33, and other parts are the same.

As shown in FIG. 4a and FIG. 4b, a quantity $N_1$ of turns of the first primary-side winding NP1 is greater than or equal to 0, and a quantity $N_2$ of turns of the first secondary-side winding NS1 is greater than 0.

As shown in FIG. 4a, the first rectifier circuit 34 may be a full-bridge circuit, including a third switching transistor S31, a fourth switching transistor S41, a fifth switching transistor S51, and a sixth switching transistor S61. The third switching transistor S31, the fourth switching transistor S41, the fifth switching transistor S51, and the sixth switching transistor S61 may all be transistors. For example, the third switching transistor S31, the fourth switching transistor S41, the fifth switching transistor S51, and the sixth switching transistor S61 may all be MOS transistors. The third switching transistor S31 and the fourth switching transistor S41 are connected in series, the fifth switching transistor S51 and the sixth switching transistor S61 are connected in series, and the third switching transistor S31 and the fourth switching transistor S41 connected in series are connected in parallel to the fifth switching transistor S51 and the sixth switching transistor S61 connected in series. The dotted terminal of the first secondary-side winding NS1 is connected between the third switching transistor S31 and the fourth switching transistor S41, and the undotted terminal of the first secondary-side winding NS1 is connected between the fifth switching transistor S51 and the sixth switching transistor S61. Two terminals of the fifth switching transistor S51 and the sixth switching transistor S61 connected in series are respectively connected to two terminals of the first output capacitor Cout1 and two terminals of the load 13. The negative electrode of the power supply 14 and the first output capacitor Cout1 are grounded together.

The third switching transistor S31, the fourth switching transistor S41, the fifth switching transistor S51, and the sixth switching transistor S61 are all connected to an external drive circuit. FIG. 5 is a drive waveform diagram of each switching transistor in a converter. As shown in FIG. 5, in this embodiment, the first switching transistor S11, the third switching transistor S31, and the sixth switching transistor S61 are turned on simultaneously, or the second switching transistor S21, the fourth switching transistor S41, and the fifth switching transistor S51 are turned on simultaneously, and a phase difference between a drive signal on the first switching transistor S11, the third switching transistor S31, and the sixth switching transistor S61 and a drive signal on the second switching transistor S21, the fourth switching transistor S41, and the fifth switching transistor S51 is 180°. In other words, when the first switching transistor S11, the third switching transistor S31, and the sixth switching transistor S61 are all turned on, the second switching transistor S21, the fourth switching transistor S41, and the fifth switching transistor S51 are all turned off; and vice versa.

In the converter in this embodiment of this application, in a first half cycle, the first switching transistor S11, the third switching transistor S31, and the sixth switching transistor S61 are turned on, and the second switching transistor S21, the fourth switching transistor S41, and the fifth switching transistor S51 are turned off; and in a second half cycle, the first switching transistor S11, the third switching transistor S31, and the sixth switching transistor S61 are turned off, and the second switching transistor S21, the fourth switching transistor S41, and the fifth switching transistor S51 are turned on.

A resonance frequency of the first resonant circuit 32 is:

$$f_r = \frac{1}{2 \times \pi \times \sqrt{L_r \times C_r}}$$

In the formula, $f_r$ represents a resonance frequency, $L_r$ represents an inductance amount of the first inductor Lr1, and $C_r$ represents a capacitance value of the first capacitor Cr1. When a working frequency $f$ and $f_r$ of the first resonant circuit 32 are the same or have a difference of within 10%, a first voltage calculation formula may be obtained based on a working state of each switching transistor in the first half cycle: $V_{in}=V_{cr}+N_1/N_2 \times V_{out}+V_{out}$. In the formula, $V_{in}$ represents an input voltage of the converter, $V_{cr}$ represents a voltage of the first resonant circuit 32, $N_1$ represents a quantity of turns of the first primary-side winding NP1, $N_2$ represents a quantity of turns of the first secondary-side winding NS1, and $V_{out}$ represents an output voltage of the converter. A second voltage calculation formula may be obtained based on a working state of each switching transistor in the second half cycle: $V_{cr}=N_1/N_2 \times V_{out}+V_{out}$. A voltage gain calculation formula of the converter may be obtained by combining the first voltage calculation formula and the second voltage calculation formula: $G=V_{out}/V_{in}=N_2/(2 \times N_1+2 \times N_2)$. It can be learned from the voltage gain G calculation formula that, a voltage gain G of the converter is related to only the quantity of turns of the first primary-side winding NP1 and the quantity of turns of the second primary-side winding NP2. Therefore, the voltage gain G may be changed by changing the quantity $N_1$ of turns of the first primary-side winding NP1 and the quantity $N_2$ of turns of the first secondary-side winding NS1. In addition, it can also be learned from the voltage gain calculation formula that the voltage gain G is unrelated to the current of the load 13, that is, regardless of whether the current of the load 13 increases or decreases, the voltage gain G of the converter remains unchanged. The voltage gain G of the converter may also be referred to as the conversion ratio of the converter.

In the half-bridge LLC converter shown in FIG. 1b, a voltage calculation formula of the resonant circuit is:

$V_{cr}=1/2V_{in}$, and a voltage gain G calculation formula is: $G=N_2/(2\times N_1)$. When the voltage gain G is 0.25, a ratio of the quantity $N_1$ of turns of the first primary-side winding NP1 to the quantity $N_2$ of turns of the first secondary-side winding NS1 in the half-bridge LLC converter shown in FIG. 1b is: $N_1/N_2=2:1$, and a ratio of the quantity $N_1$ of turns of the first primary-side winding to the quantity $N_2$ of turns of the first secondary-side winding NS1 in the converter in the embodiment shown in FIG. 4a is: $N_1/N_2=1:1$. It can be learned that when there is the same first secondary-side winding NS1, the quantity of turns of the first primary-side winding NP1 in the converter in the embodiment shown in FIG. 4a is less than the quantity of turns of the first primary-side winding NP1 in the converter shown in FIG. 1b. Therefore, in the embodiment shown in FIG. 4a, the quantity of turns of the first primary-side winding NP1 in the first transformer 33 can be reduced, and a resistance value of the first primary-side winding NP1 can be reduced, to reduce a loss of the first transformer 33 and further improve conversion efficiency of the converter.

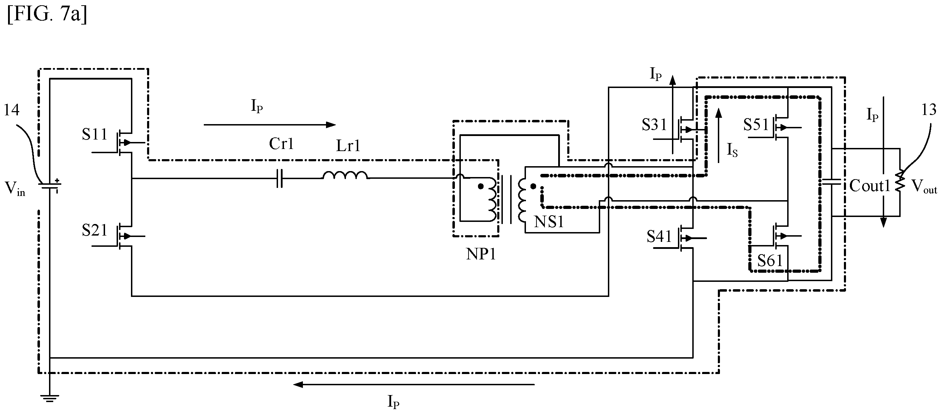

As shown in FIG. 7a, in a first half cycle, a current $I_P$ flows through the first switching transistor S11, the first capacitor Cr1, the first inductor Lr1, the dotted terminal of the first primary-side winding NP1, the undotted terminal of the first primary-side winding NP1, the dotted terminal of the first secondary-side winding NS1, the third switching transistor S31, and the load 13, and flows back to the negative electrode of the power supply 14. A current $I_S$ that is induced from the first primary-side winding NP1 to the second secondary-side winding NS1 successively flows through the dotted terminal of the first secondary-side winding NS1, the third switching transistor S31, the load 13, and the sixth switching transistor S61, and flows back to the undotted terminal of the first secondary-side winding NS1. It can be learned from FIG. 7a that, because both the current $I_P$ and the current $I_S$ flows through the third switching transistor S31, and the third switching transistor S31 and the fourth switching transistor S41 are connected in series, currents on the third switching transistor S31 and the fourth switching transistor S41 are both $I_P+I_S$. Currents on the fifth switching transistor S51 and the sixth switching transistor S61 are both $I_S$.

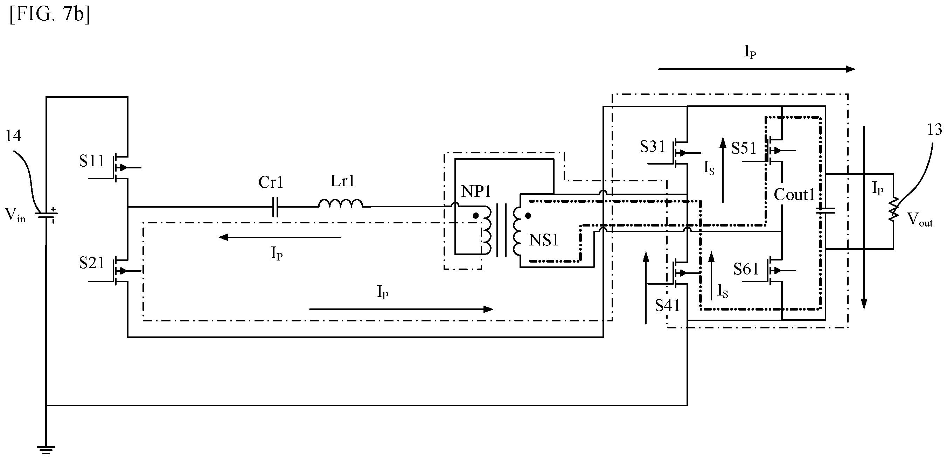

As shown in FIG. 7b, in a second half cycle, the current $I_P$ flows through the load 13, the fourth switching transistor S41, the dotted terminal of the first secondary-side winding NS1, the undotted terminal of the first primary-side winding NP1, the dotted terminal of the first primary-side winding NP1, the first inductor Lr1, the first capacitor Cr1, and the second switching transistor S21, and flows back to the load 13. The current $I_S$ flows through the load 13, the second switching transistor S21, the dotted terminal of the first secondary-side winding NS1, the undotted terminal of the first secondary-side winding NS1, and the fifth switching transistor S51, and flows back to the load 13. It can be learned from FIG. 7b that, because both the current $I_P$ and the current $I_S$ flows through the fourth switching transistor S41, and the third switching transistor S31 and the fourth switching transistor S41 are connected in series, currents on the third switching transistor S31 and the fourth switching transistor S41 are both $I_P+I_S$. Currents on the fifth switching transistor S51 and the sixth switching transistor S61 are both $I_S$.

It can be learned from FIG. 7a and FIG. 7b that, in the embodiment shown in FIG. 4a, the second electrode B2 of the second switching transistor S21 is connected to the output terminal 36 through a cable. In the first half cycle, in a current of the load 13, for a part of the current, a direct current is converted by the first inverter 31 into an alternating current. After the alternating current is processed by the first transformer 33, energy is transferred from the first primary-side winding NP1 to the first secondary-side winding NS1 in a magnetic field coupling manner, and then the alternating current is converted by the first rectifier circuit 34 into a direct current, to supply power to the load 13. The other part of the current is directly transferred from the first primary-side winding NP1 to the first secondary-side winding NS1 through a connection cable between the first primary-side winding NP1 and the first secondary-side winding NS1. In the second half cycle, in a current of the load 13, for a part of the current, a direct current is converted by the first inverter 31 into an alternating current. After the alternating current is processed by the first transformer 33, energy is transferred from the first primary-side winding NP1 to the first secondary-side winding NS1 in the magnetic field coupling (isolation) manner, and then the alternating current is converted by the first rectifier circuit 34 into a direct current, to supply power to the load. The other part of the current is directly transferred from the second electrode B2 of the second switching transistor S21 to the load 13 through a cable. Therefore, the first transformer 33 does not need to process the part of the current that is directly transferred from the first primary-side winding NP1 to the first secondary-side winding NS1 and the part of the current that is directly transferred from the second electrode B2 of the second switching transistor S21 to the load, to reduce a power that needs to be processed by the first transformer 33, and improve conversion efficiency of the converter.

It can be learned from FIG. 7a and FIG. 7b that, for the converter in the embodiment shown in FIG. 4a, regardless of the first half cycle or the second half cycle, the currents on the third switching transistor S31 and the fourth switching transistor S41 are both $I_P+I_S$, and the currents on the fifth switching transistor S51 and the sixth switching transistor S61 are both $I_S$.

In the converter shown in FIG. 4b, because the dotted terminal of the first primary-side winding NP1 is connected to the undotted terminal of the first secondary-side winding NS1, in the first half cycle and the second half cycle, the currents on the third switching transistor S31 and the fourth switching transistor S41 are both $I_S$, and the currents on the fifth switching transistor S51 and the sixth switching transistor S61 are both $I_P+I_S$.

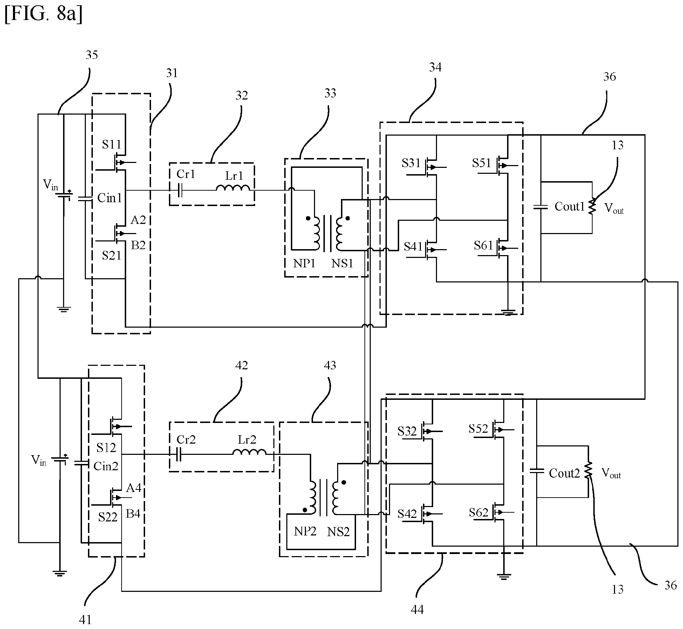

Therefore, in the converters shown in FIG. 4a and FIG. 4b, the currents on the third switching transistor S31 and the fourth switching transistor S41 are different from the currents on the fifth switching transistor S51 and the sixth switching transistor S61. In view of this, as shown in FIG. 8a, the converter shown in FIG. 4a and the converter shown in FIG. 4b may be connected in parallel to form a converter, to resolve a problem of different currents.

As shown in FIG. 8a, the converter includes an input terminal 35, a first input capacitor Cinl, a first inverter circuit 31, a first resonant circuit 32, a first transformer 33, a first rectifier circuit 34, a first output capacitor Coutl, an output terminal 36, a second input capacitor Cin2, a second inverter circuit 41, a second resonant circuit 42, a second transformer 43, a second rectifier circuit 44, and a second output capacitor Cout2. Both the first input capacitor Cin1 and the second input capacitor Cin2 are connected to the input terminal 35. Both the first rectifier circuit 34 and the second rectifier circuit 44 are connected to the output terminal 36. Because the converter shown in FIG. 4a has the two output terminals 36, and the converter shown in FIG. 4b has the two output terminals 36, the first rectifier circuit 34 and the second rectifier circuit 44 are respectively connected to the two output terminals 36. For example, a fifth switching transistor S51 in the first rectifier circuit 34 and a fifth switching transistor S52 in the second rectifier circuit 44 are connected and connected to one output terminal 36, and a sixth switching transistor S61 in the first rectifier circuit 34 and a sixth switching transistor S62 in the second rectifier circuit 44 are connected and connected to another output terminal 36.

As shown in FIG. 8a, an undotted terminal of a first primary-side winding NP1 in the first transformer 33 is connected to a dotted terminal of a first secondary-side winding NS1. The second transformer 43 includes a second primary-side winding NP2 and a second secondary-side winding NS2, and a dotted terminal of the second primary-side winding NP2 is connected to an undotted terminal of the second secondary-side winding NS2. The first secondary-side winding NS1 and the second secondary-side winding NS2 are connected in parallel, that is, the dotted terminal of the first secondary-side winding NS1 is connected to a dotted terminal of the second secondary-side winding NS2, and an undotted terminal of the first secondary-side winding NS1 is connected to the undotted terminal of the second secondary-side winding NS2.

A difference between the converter shown in FIG. 4a and the converter shown in FIG. 4b lies in that the first primary-side winding NP1 and the first secondary-side winding NS1 are connected in different manners. For example, the converter shown in FIG. 4a uses the connection manner shown in FIG. 6a, and the converter shown in FIG. 4b uses the connection manner shown in FIG. 6b. To be specific, the connection manner of the first primary-side winding NP1 and the first secondary-side winding NS1 in the first transformer 33 in the converter shown in FIG. 8a is different from the connection manner of the second primary-side winding NP2 and the second secondary-side winding NS2 in the second transformer 43.

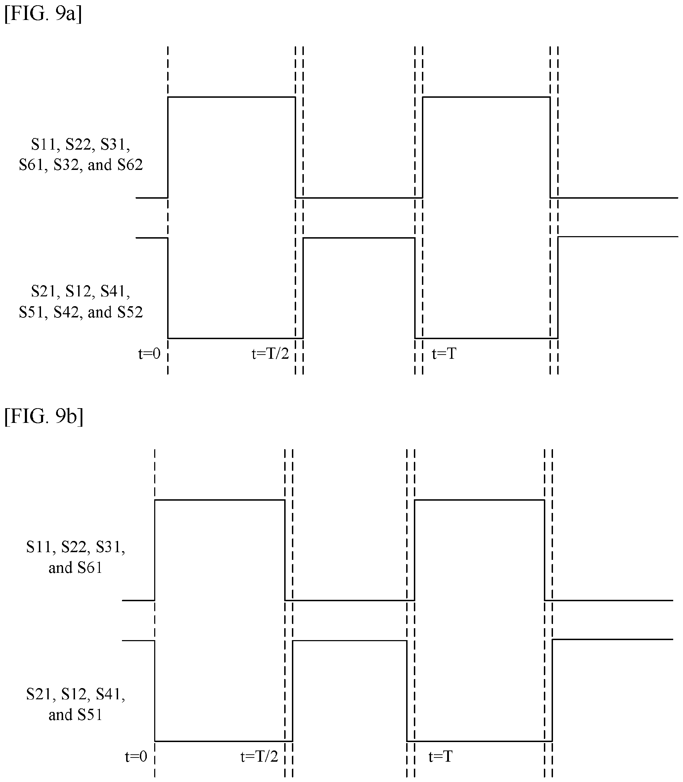

The first inverter circuit 31 and the second inverter circuit 41 have a drive phase difference of 180°. As shown in FIG. 9a, a first switching transistor S11 of the first inverter circuit 31 and a second switching transistor S22 of the second inverter circuit 41 have a same phase, a second switching transistor S21 of the first inverter circuit 31 and a first switching transistor S12 of the second inverter circuit 41 have a same phase, the first switching transistor S11 and the second switching transistor S21 of the first inverter circuit 31 have a phase difference of 180°, and the first switching transistor S12 and the second switching transistor S22 of the second inverter circuit 41 have a phase difference of 180°. In addition, the first switching transistor S11, the second switching transistor S22, the third switching transistors S31 and S32, and the sixth switching transistors S61 and S62 all have the same phase, and the first switching transistor S12, the second switching transistor S21, the fourth switching transistors S41 and S42, and the fifth switching transistors S51 and S52 all have the same phase.

With reference to FIG. 7a, FIG. 7b, and FIG. 8a, it can be learned that, if in the first half cycle, the first switching transistor S11 in the first inverter circuit 31 and the second switching transistor S22 in the second inverter circuit 41 are turned on, currents on the third switching transistor S32, the fourth switching transistor S42, the fifth switching transistor S52, and the sixth switching transistor S62 in the first rectifier circuit 34 and the second rectifier circuit 44 are all $(I_P+I_S+I_S)/2$. If in the second half cycle, the second switching transistor S21 in the first inverter circuit 31 and the first switching transistor S12 in the second inverter circuit 41 are turned on, currents on the third switching transistor S32, the fourth switching transistor S42, the fifth switching transistor S52, and the sixth switching transistor S62 in the first rectifier circuit 34 and the second rectifier circuit 44 are all $(I_P+I_S+I_S)/2$. In this way, currents on the switching transistors in the first rectifier circuit 34 and the second rectifier circuit 44 are the same.

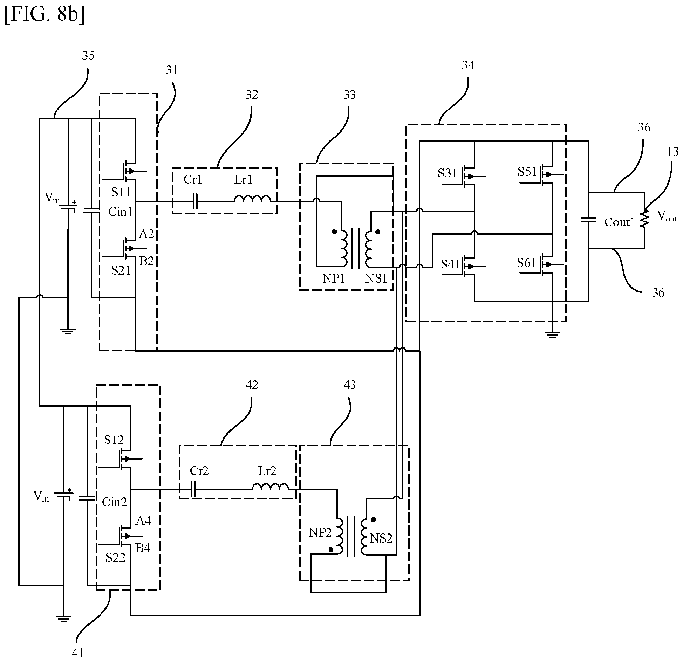

A difference between the converter in the embodiment shown in FIG. 8b and the converter shown in FIG. 8a lies in that, as shown in FIG. 8b, in this embodiment, the second rectifier circuit 44 and the second output capacitor Cout2 in the converter shown in FIG. 8a are removed. Specifically, the converter shown in FIG. 8b includes the input terminal 35, the first input capacitor Cinl, the first inverter circuit 31, the first resonant circuit 32, the first transformer 33, the first rectifier circuit 34, the first output capacitor Coutl, the output terminal 36, the second input capacitor Cin2, the second inverter circuit 41, the second resonant circuit 42, and the second transformer 43.

As shown in FIG. 8b, a second electrode B4 of the second switching transistor S22 in the second inverter circuit 41 is connected to a second electrode B2 of the first switching transistor S11 in the first inverter circuit 31.

As shown in FIG. 9b, the first switching transistor S11, the second switching transistor S22, the third switching transistor S31, and the sixth switching transistor S61 all have a same phase, and the first switching transistor S12, the second switching transistor S21, the fourth switching transistor S41, and the fifth switching transistor S51 all have a same phase. The first switching transistor S11 and the second switching transistor S21 have a phase difference of 180°, and the first switching transistor S12 and the second switching transistor S22 have a phase difference of 180°.

Same as the converter shown in FIG. 8a, in the converter shown in FIG. 8b, a connection manner of the first primary-side winding NP1 and the first secondary-side winding NS1 in the first transformer 33 is different from a connection manner of the second primary-side winding NP2 and the second secondary-side winding NS2 in the second transformer 43, and the first inverter circuit 31 and the second inverter circuit 41 have a drive phase difference of 180°. Therefore, in the converter shown in FIG. 8b, currents on the switching transistors in the first rectifier circuit 34 are all $(I_P+I_S+I_S)/2$. In this way, the currents on the switching transistors in the first rectifier circuit 34 are the same.

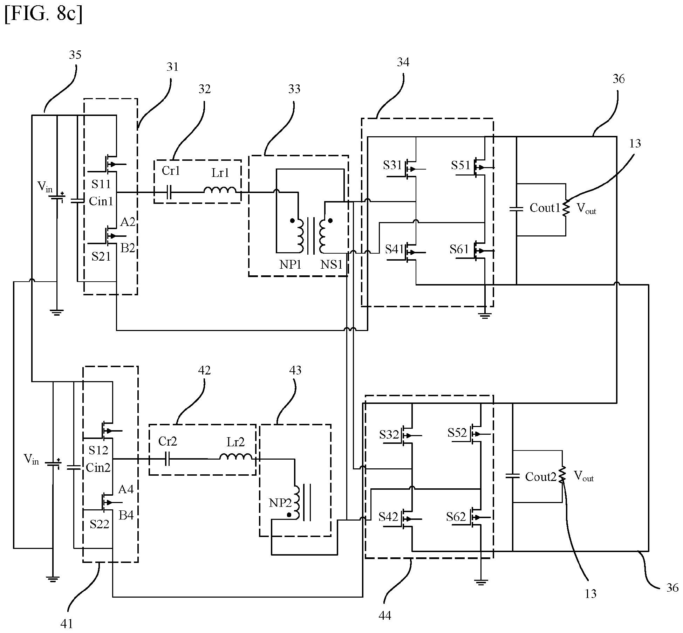

A difference between the embodiment shown in FIG. 8c and the embodiment shown in FIG. 8a lies in that the second secondary-side winding NS2 in the converter shown in FIG. 8a is removed. Specifically, as shown in FIG. 8c, the second transformer 43 includes the second primary-side winding NP2, but does not include the second secondary-side winding NS2. An undotted terminal of the second primary-side winding NP2 is connected to the second inductor Lr2, a dotted terminal of the second primary-side winding NP2 is connected to an undotted terminal of the first secondary-side winding NS1 and is connected to the second rectifier circuit 44, and a dotted terminal of the first secondary-side winding NS1 is connected to the second rectifier circuit 44.

Same as the converter shown in FIG. 8a, in the converter shown in FIG. 8c, a connection manner of the first primary-side winding NP1 and the first secondary-side winding NS1 in the first transformer 33 is different from a connection manner of the second primary-side winding NP2 and the first secondary-side winding NS1, and the first inverter circuit 31 and the second inverter circuit 41 have a drive phase difference of 180°. Therefore, in the converter shown in FIG. 8c, currents on the switching transistors in the first rectifier circuit 34 and the second rectifier circuit 44 are all $(I_P+I_S+I_S)/2$. In this way, currents on the switching transistors in the first rectifier circuit 34 and the second rectifier circuit 44 are the same.

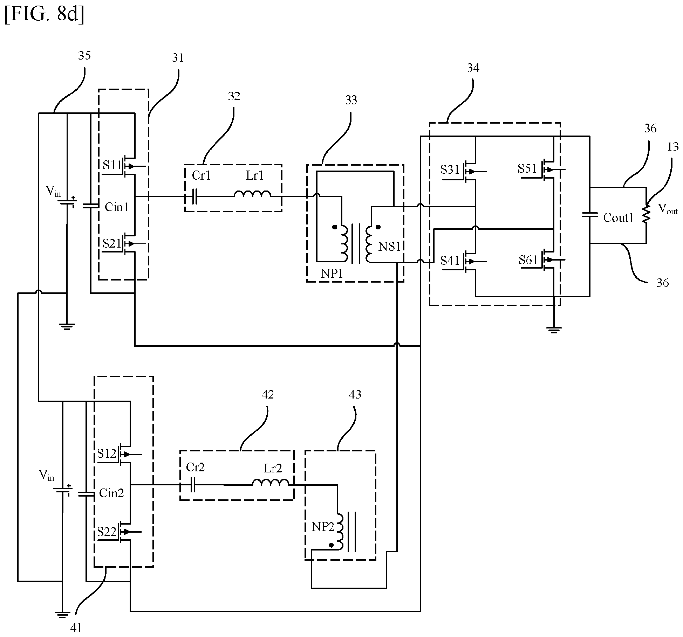

A difference between the converter in the embodiment shown in FIG. 8d and the converter shown in FIG. 8c lies in that the second rectifier circuit 44 and the second output capacitor Cout2 in the converter shown in FIG. 8c are removed. Specifically, the converter shown in FIG. 8c includes the input terminal 35, the first input capacitor Cinl, the first inverter circuit 31, the first resonant circuit 32, the first transformer 33, the first rectifier circuit 34, the first output capacitor Coutl, the output terminal 36, the second input capacitor Cin2, the second inverter circuit 41, the second resonant circuit 42, and the second transformer 43.

Same as the converter shown in FIG. 8c, in the converter shown in FIG. 8d, a connection manner of the first primary-side winding NP1 and the first secondary-side winding NS1 in the first transformer 33 is different from a connection manner of the second primary-side winding NP2 and the first secondary-side winding NS1, and the first inverter circuit 31 and the second inverter circuit 41 have a drive phase difference of 180°. Therefore, in the converter shown in FIG. 8d, currents on the switching transistors in the first rectifier circuit 34 are all $(I_P+I_S+I_S)/2$. In this way, the currents on the switching transistors in the first rectifier circuit 34 are the same.

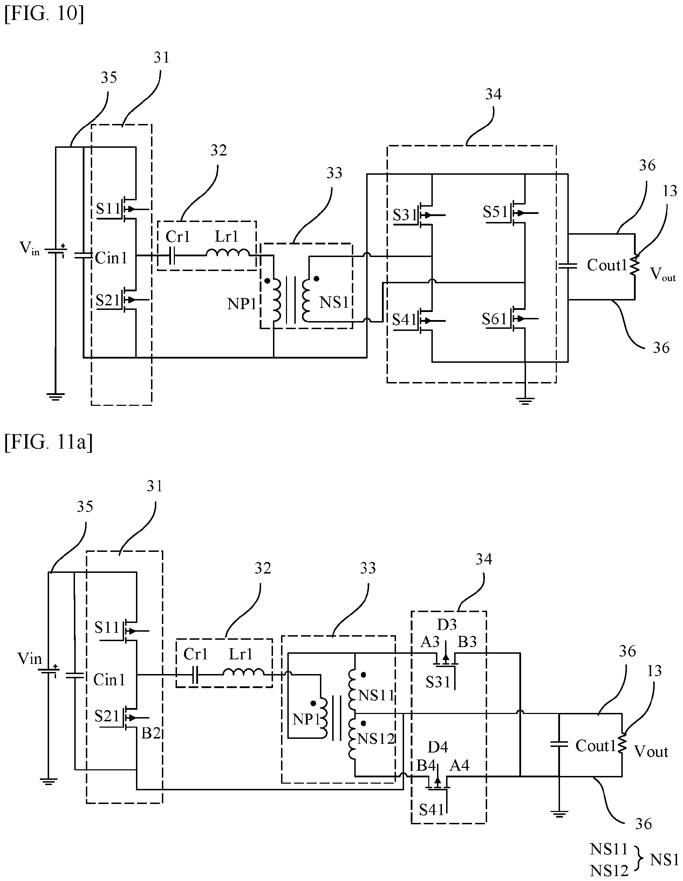

A difference between the embodiment shown in FIG. 10 and the embodiment shown in FIG. 4a lies in a connection position of the undotted terminal of the first primary-side winding NP1. In the embodiment shown in FIG. 4a, the undotted terminal of the first primary-side winding NP1 is connected to the dotted terminal of the first secondary-side winding NS1. In this embodiment, as shown in FIG. 10, the undotted terminal of the first primary-side winding NP1 is connected to the output terminal 36. In this way, in the first half cycle, in a current of the load 13, for a part of the current, a direct current is converted by the first inverter 31 into an alternating current. After the alternating current is processed by the first transformer 33, energy is transferred from the first primary-side winding NP1 to the first secondary-side winding NS1 in the magnetic field coupling manner, and then the alternating current is converted by the first rectifier circuit 34 into a direct current, to supply power to the load 13. The other part of the current is directly transferred from the second electrode B2 of the second switching transistor S21 to the load 13 through a cable. It can be learned from FIG. 10 that, a voltage calculation formula of the first resonant circuit 32 is: $V_{cr}=N_1/(2{\times}N_1+N_2){\times}V_{in}$, and a voltage gain calculation formula is: $G=V_{out}/V_{in}=N_2/(2{\times}N_1+N_2)$. When a voltage gain is 0.25, a ratio of the quantity of turns of the first primary-side winding NP1 to the quantity of turns of the first secondary-side winding NS1 is: $N_1{:}N_2=1.5{:}1$. In the converter shown in FIG. 1b, when the voltage gain is 0.25, a ratio of the quantity of turns of the first primary-side winding NP1 to the quantity of turns of the first secondary-side winding NS1 is: $N_1{:}N_2=2{:}1$. It can be learned that, when there is the same first secondary-side winding NS1, the quantity of turns of the first primary-side winding NP1 in the converter in the embodiment shown in FIG. 10 is less than the quantity of turns of the first primary-side winding NP1 in the converter shown in FIG. 1b. Therefore, in the embodiment shown in FIG. 10, the quantity of turns of the first primary-side winding NP1 in the first transformer 33 can be reduced, and a resistance value of the first primary-side winding NP1 can be reduced, to reduce a loss of the first transformer 33 and further improve conversion efficiency of the converter.

A difference between the embodiment shown in FIG. 11a and the embodiment shown in FIG. 4a lies in that a structure of the first secondary-side winding NS1 is different from a structure of the first rectifier circuit 34. Specifically, in the embodiment shown in FIG. 4a, the first secondary-side winding NS1 is a complete winding. In this embodiment, the first secondary-side winding NS1 includes a first secondary-side sub-winding NS11 and a second secondary-side sub-winding NS12. In the embodiment shown in FIG. 4a, the first rectifier circuit 34 is a full-bridge circuit, and in this embodiment, the first rectifier circuit 34 is a half-bridge circuit.

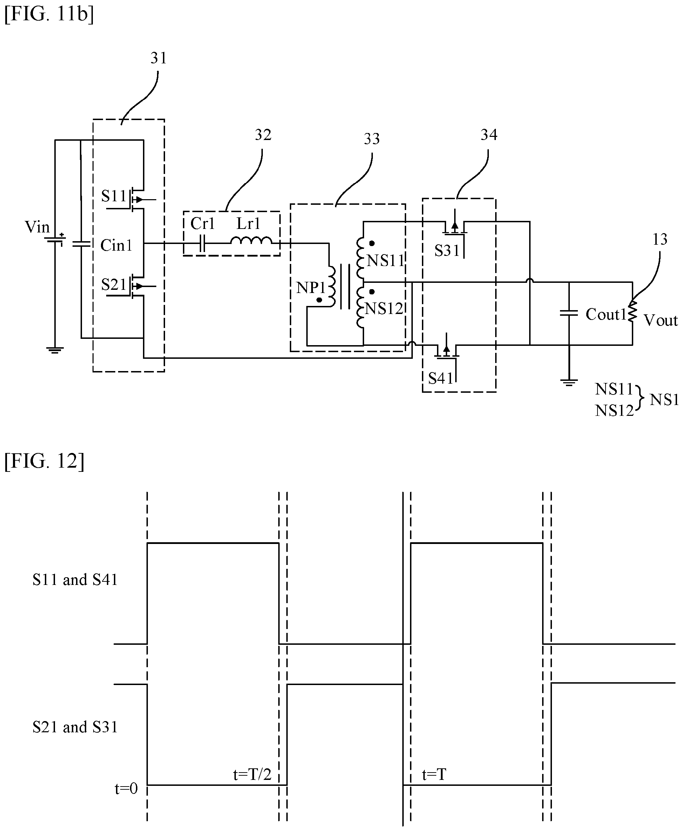

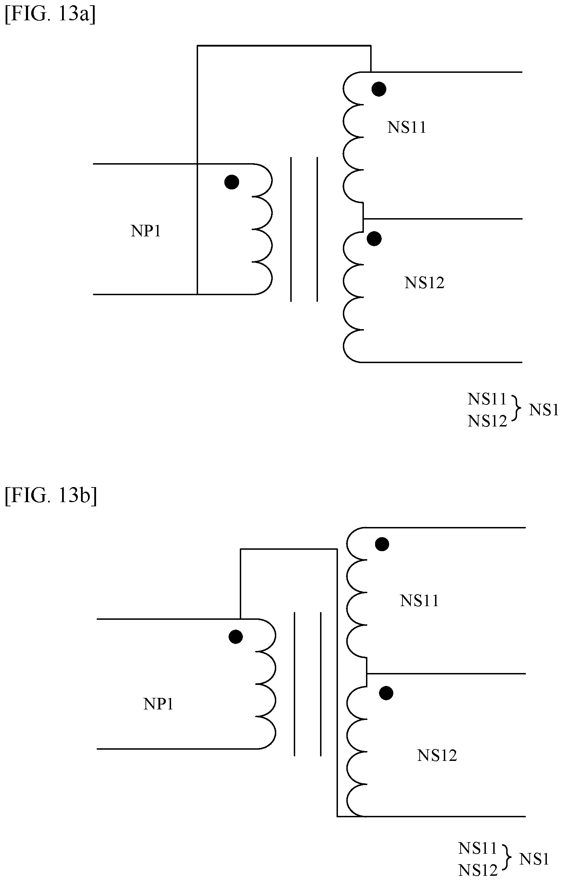

As shown in FIG. 13a and FIG. 13b, the first primary-side winding NP1 and the first secondary-side winding NS1 are connected in two manners. As shown in FIG. 13a, an undotted terminal of the first primary-side winding NP1 is connected to a dotted terminal of the first secondary-side sub-winding NS11. As shown in FIG. 13b, a dotted terminal of the first primary-side winding NP1 is connected to an undotted terminal of the second secondary-side sub-winding NS12. As shown in FIG. 11a and FIG. 11b, the connection manners in FIG. 13a and FIG. 13b are separately used. It should be noted that, a difference between FIG. 11b and FIG. 11a lies only in the manner of the connection between the first primary-side winding NP1 and the first secondary-side winding NS1.

As shown in FIG. 11a, the dotted terminal of the first primary-side winding NP1 is connected to the first inductor Lr1, the undotted terminal of the first primary-side winding NP1 is connected to the dotted terminal of the first secondary-side sub-winding NS11 and is connected to the first rectifier circuit 34, the undotted terminal of the first secondary-side sub-winding NS11 is connected to the dotted terminal of the second secondary-side sub-winding NS12 and is connected to one terminal of the first output capacitor Cout1, and the undotted terminal of the second secondary-side sub-winding NS12 is connected to the first rectifier circuit 34.

As shown in FIG. 11b, the undotted terminal of the first primary-side winding NP1 is connected to the first inductor Lr1, the dotted terminal of the first primary-side winding NP1 is connected to the undotted terminal of the second secondary-side sub-winding NS12 and is connected to the third switching transistor S31 in the first rectifier circuit 34, the undotted terminal of the first secondary-side sub-winding NS11 is connected to the dotted terminal of the second secondary-side sub-winding NS12 and is connected to one terminal of the first output capacitor Cout1, and the dotted terminal of the first secondary-side sub-winding NS11 is connected to the fourth switching transistor S41 in the first rectifier circuit 34.

In FIG. 11a and FIG. 11b, the quantity $N_1$ of turns of the first primary-side winding NP1 is greater than 0, and a quantity $N_{21}$ of turns of the first secondary-side sub-winding NS11 is the same as a quantity $N_{22}$ of turns of the second secondary-side sub-winding NS12, and is set to $N_2$.

As shown in FIG. 11a, the first rectifier circuit 34 includes the third switching transistor S31 and the fourth switching transistor S41, a first electrode A3 of the third switching transistor S31 is connected to the dotted terminal of the first secondary-side sub-winding NS11, and a second electrode B4 of the fourth switching transistor S41 is connected to the undotted terminal of the second secondary-side sub-winding NS12, and a second electrode B3 of the third switching transistor S31 is connected to a first electrode A4 of the fourth switching transistor S41 and is connected to another terminal of the first output capacitor Cout1.

FIG. 12 is a drive waveform diagram of each switching transistor in a converter. As shown in FIG. 12, in this embodiment, the first switching transistor S11 and the fourth switching transistor S41 are turned on simultaneously, or the second switching transistor S21 and the third switching transistor S31 are turned on simultaneously, and a phase difference between a drive signal on the first switching transistor S11 and the fourth switching transistor S41 and a drive signal on the second switching transistor S21 and the third switching transistor S31 is 180°.

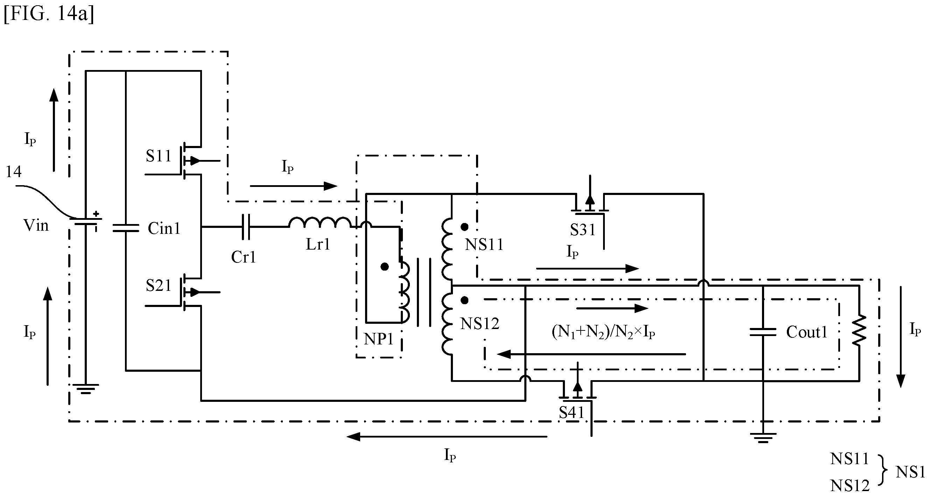

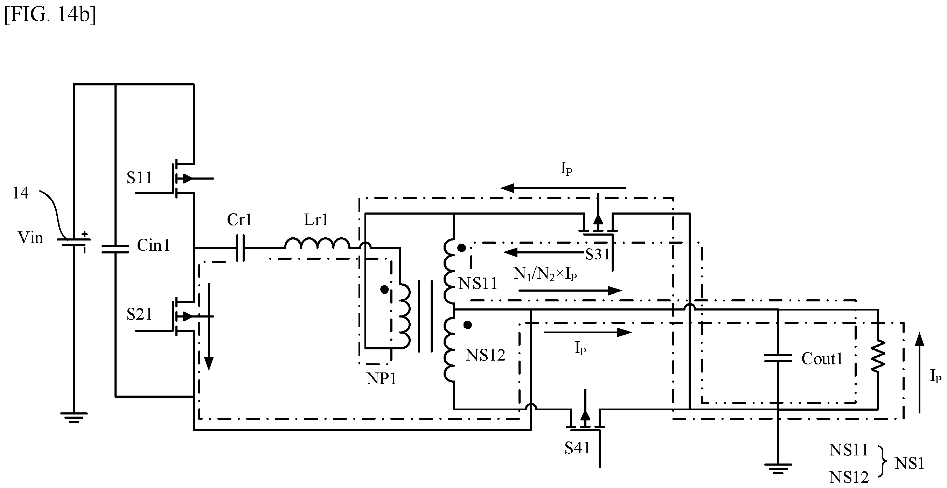

As shown in FIG. 14a, in the converter shown in FIG. 11a, in the first half cycle, the first switching transistor S11 and the fourth switching transistor S41 are turned on, and the second switching transistor S21 and the third switching transistor S31 are turned off. As shown in FIG. 14b, in the converter shown in FIG. 11a, in the second half cycle, the first switching transistor S11 and the fourth switching transistor S41 are turned off, and the second switching transistor S21 and the third switching transistor S31 are turned on.

A second voltage calculation formula may be obtained based on a working state of each switching transistor in the second half cycle: $V_{cr}=(N_1+N_2)$, and further, a voltage gain G calculation formula of the converter may be obtained: $G=V_{out}/V_{in}=N_2/(2\times N_1+3\times N_2)$. It can be learned from the voltage gain G calculation formula that, a voltage gain G of the converter is related to only the quantity of turns of the first primary-side winding NP1 and the quantity of turns of the second primary-side winding NP2. Therefore, the voltage gain G may be changed by changing the quantity $N_1$ of turns of the first primary-side winding NP1 and the quantity $N_2$ of turns of the first secondary-side winding NS1. In addition, it can also be learned from the voltage gain G calculation formula that the voltage gain G is unrelated to the current of the load 13, that is, regardless of whether the current of the load 13 increases or decreases, the voltage gain G of the converter remains unchanged.

In the half-bridge LLC converter shown in FIG.

1a, a voltage calculation formula of the resonant circuit is: $V_{cr}=1/2V_{in}$, and a voltage gain G calculation formula is: $G=N_2/(2\times N_1)$. When the voltage gain G is 0.25, a ratio of the quantity $N_1$ of turns of the first primary-side winding NP1 to the quantity $N_2$ of turns of the first secondary-side winding NS1 in the half-bridge LLC converter shown in FIG. 1a is: $N_1/N_2=2:1$, and a ratio of the quantity $N_1$ of turns of the first primary-side winding NP1 to the quantity $N_2$ of turns of the first secondary-side sub-winding NS11 in the converter in the embodiment shown in FIG. 11a is: $N_1/N_2=0.5:1$. It can be learned that when there is the same first secondary-side winding NS1, the quantity of turns of the first primary-side winding NP1 in the converter in the embodiment shown in FIG. 11a is less than the quantity of turns of the first primary-side winding NP1 in the converter shown in FIG. 1a. Therefore, in the embodiment shown in FIG. 11a, the quantity of turns of the first primary-side winding NP1 in the first transformer 33 can be reduced, and a resistance value of the first primary-side winding NP1 can be reduced, to reduce a loss of the first transformer 33 and further improve conversion efficiency of the converter.

As shown in FIG. 14a, in the first half cycle, a current $I_P$ flows through the first switching transistor S11, the first capacitor Cr1, the first inductor Lr1, the dotted terminal of the first primary-side winding NP1, the undotted terminal of the first primary-side winding NP1, the dotted terminal of the first secondary-side sub-winding NS11, the undotted terminal of the first secondary-side sub-winding NS11, the load 13, and a ground terminal, and flows back to the negative electrode of the power supply 14. A current $(N_1+N_2)/N_2\times I_P$ that is induced from the first primary-side winding NP1 to the second secondary-side sub-winding NS12 successively flows through the dotted terminal of the second secondary-side sub-winding NS12, the load 13, and the fourth switching transistor S41, and flows back to the undotted terminal of the second secondary-side sub-winding NS12. Therefore, in the first half cycle, a current on the first secondary-side sub-winding NS11 is $I_P$, and a current on the second secondary-side sub-winding NS12 is $(N_1+N_2)/N_2\times I_P$.

As shown in FIG. 14b, in the second half cycle, a current flows through the second switching transistor S21, the load 13, the third switching transistor S31, the undotted terminal of the first primary-side winding NP1, the dotted terminal of the first primary-side winding NP1, the first inductor Lr1, and the first capacitor Cr1, and flows back to the second switching transistor S21. The current flows through the dotted terminal of the first secondary-side sub-winding NS11, the undotted terminal of the first secondary-side sub-winding NS11, the load 13, and the third switching transistor S31, and flows back to the first secondary-side sub-winding NS11. A current on the first secondary-side sub-winding NS11 is $N_1/N_2\times I_P$. Because the current does not flow through the second secondary-side sub-winding NS12, a current on the second secondary-side sub-winding NS12 is 0.

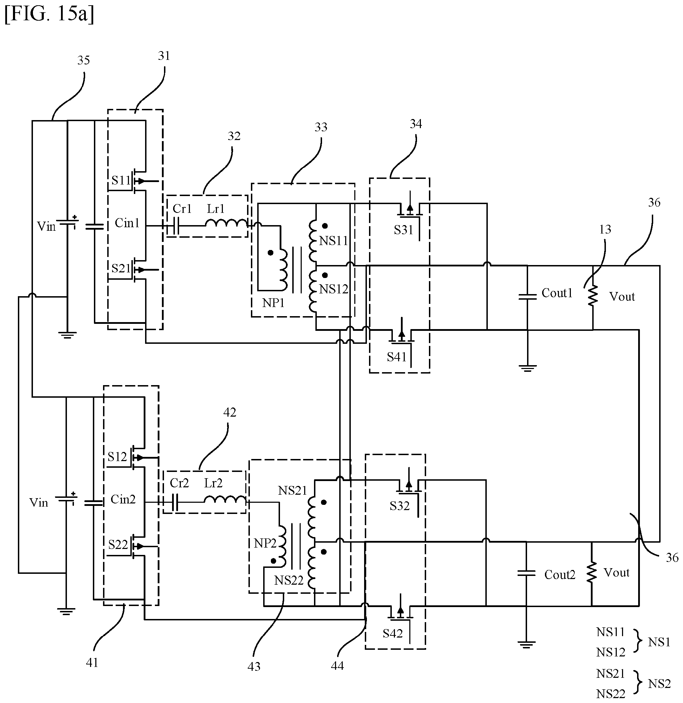

Same as the embodiment shown in FIG. 4a, the second electrode B2 of the second switching transistor S21 is connected to the output terminal 36 through a cable. Therefore, it can be learned from FIG. 14a and FIG. 14b that, in a current of the load 13, for a part of the current, a direct current is converted by the first inverter 31 into an alternating current. After the alternating current is processed by the first transformer 33, energy is transferred from the first primary-side winding NP1 to the second secondary-side sub-winding NS12 in the magnetic field coupling manner, and then the alternating current is converted by the first rectifier circuit 34 into a direct current, to supply power to the load. The other part of the current is directly transferred from the first primary-side winding NP1 to the first secondary-side sub-winding NS11 through a connection cable between the first primary-side winding NP1 and the first secondary-side sub-winding NS11. In the second half cycle, in a current of the load 13, for a part of the current, a direct current is converted by the first inverter 31 into an alternating current. After the alternating current is processed by the first transformer 33, energy is transferred from the first primary-side winding NP1 to the first secondary-side sub-winding NS11 in the magnetic field coupling (isolation) manner, and then the alternating current is converted by the first rectifier circuit 34 into a direct current, to supply power to the load. The other part of the current is directly transferred from the second electrode B2 of the second switching transistor S21 to the load 13 through a cable. Therefore, the first transformer 33 does not need to process the part of the current that is directly transferred from the first primary-side winding NP1 to the first secondary-side sub-winding NS11 and the part of the current that is directly transferred from the second electrode B2 of the second switching transistor S21 to the load 13, to reduce a power that needs to be processed by the first transformer 33, and improve conversion efficiency of the converter. It can be learned from FIG. 14a and FIG. 14b that, in one cycle, valid values of currents on the first secondary-side sub-winding NS11 and the second secondary-side sub-winding NS12 are different. In view of this, as shown in FIG. 15a, the converter shown in FIG. 11a and the converter shown in FIG. 11b may be connected in parallel to form a converter, to resolve a problem that valid values of currents are different.

As shown in FIG. 15a, the converter includes an input terminal 35, a first input capacitor Cin1, a first inverter circuit 31, a first resonant circuit 32, a first transformer 33, a first rectifier circuit 34, a first output capacitor Cout1, an output terminal 36, a second input capacitor Cin2, a second inverter circuit 41, a second resonant circuit 42, a second transformer 43, a second rectifier circuit 44, and a second output capacitor Cout2. Both the first input capacitor Cin1 and the second input capacitor Cin2 are connected to the input terminal 35. Both the first rectifier circuit 34 and the second rectifier circuit 44 are connected to the output terminal 36. Because the converter shown in FIG. 11a has the two output terminals 36, the first rectifier circuit 34 and the second rectifier circuit 44 are respectively connected to the two output terminals 36. For example, a fifth switching transistor S51 in the first rectifier circuit 34 and a fifth switching transistor S52 in the second rectifier circuit 44 are connected and connected to one output terminal 36, and a sixth switching transistor S61 in the first rectifier circuit 34 and a sixth switching transistor S62 in the second rectifier circuit 44 are connected and connected to another output terminal 36.

As shown in FIG. 15a, a second secondary-side winding NS2 in the second transformer 43 and a first secondary-side winding NS1 in the first transformer 33 are connected in parallel, that is, a dotted terminal of the first secondary-side winding NS1 is connected to a dotted terminal of the second secondary-side winding NS2, and an undotted terminal of the first secondary-side winding NS1 is connected to an undotted terminal of the second secondary-side winding NS2. In other words, a dotted terminal of the first secondary-side sub-winding NS11 is connected to a dotted terminal of the second secondary-side sub-winding NS12, and an undotted terminal of the first secondary-side sub-winding NS11 is connected to an undotted terminal of the second secondary-side sub-winding NS12.

A difference between the converter shown in FIG. 11a and the converter shown in FIG. 11b lies in that the first primary-side winding NP1 and the first secondary-side winding NS1 are connected in different manners. For example, the converter shown in FIG. 11a uses the connection manner shown in FIG. 13a, and the converter shown in FIG. 11b uses the connection manner shown in FIG. 13b. To be specific, the connection manner of the first primary-side winding NP1 and the first secondary-side winding NS1 in the first transformer 33 in the converter shown in FIG. 15a is different from the connection manner of the second primary-side winding NP2 and the second secondary-side winding NS2 in the second transformer 43.

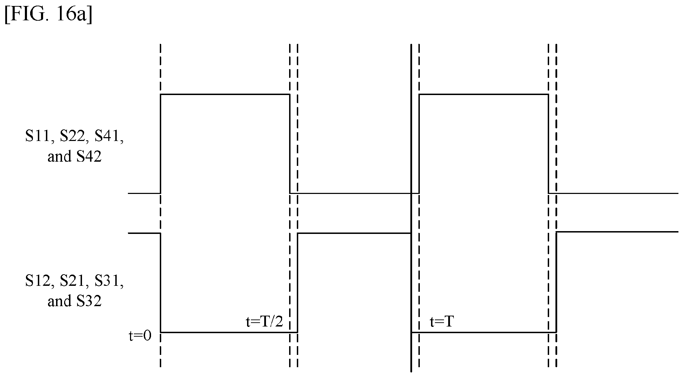

The first inverter circuit 31 and the second inverter circuit 41 have a drive phase difference of 180°. As shown in FIG. 16a, a first switching transistor S11 of the first inverter circuit 31 and a second switching transistor S22 of the second inverter circuit 41 have a same phase, a second switching transistor S21 of the first inverter circuit 31 and a first switching transistor S12 of the second inverter circuit 41 have a same phase, the first switching transistor S11 and the second switching transistor S21 of the first inverter circuit 31 have a phase difference of 180°, and the first switching transistor S12 and the second switching transistor S22 of the second inverter circuit 41 have a phase difference of 180°. In addition, the first switching transistor S11, the second switching transistor S22, and the fourth switching transistors S41 and S42 are all have the same phase, and the first switching transistor S12, the second switching transistor S21, the third switching transistors S31 and S32 are all have the same phase.

It can be learned from FIG. 11a that, in the first half cycle, because the undotted terminal of the first primary-side winding NP1 is connected to the dotted terminal of the first secondary-side sub-winding NS11, a current on the first secondary-side sub-winding NS11 is $I_P$, and a current on the second secondary-side sub-winding NS12 is $(N_1+N_2)/N_2 \times I_P$. In the second half cycle, a current on the first secondary-side sub-winding NS11 is $N_1/N_2 \times I_P$, and a current on the second secondary-side sub-winding NS12 is 0. In the converter in FIG. 11b, because the dotted terminal of the first primary-side winding NP1 is connected to the undotted terminal of the second secondary-side sub-winding NS12, in the first half cycle, a current on the first secondary-side sub-winding NS11 is 0, and a current on the second secondary-side sub-winding NS12 is $N_1/N_2 \times I_P$. In the second half cycle, a current on the first secondary-side sub-winding NS11 is $(N_1+N_2)/N_2 \times I_P$, and a current on the second secondary-side sub-winding NS12 is $I_P$. After the converter shown in FIG. 11a and the converter shown in FIG. 11b are connected in parallel, a current on the first secondary-side sub-winding NS11 in the first half cycle is $I_P$, and a current on the first secondary-side sub-winding NS11 in the second half cycle is $(2N_1+N_2)/N_2 \times I_P$. A current on the second secondary-side sub-winding NS12 in the first half cycle is $(2N_1+N_2)/N_2 \times I_P$, and a current on the second secondary-side sub-winding NS12 in the second half cycle is $I_P$. Therefore, in one cycle, valid values of currents on the first secondary-side sub-winding NS11 and the second secondary-side sub-winding NS12 are the same.

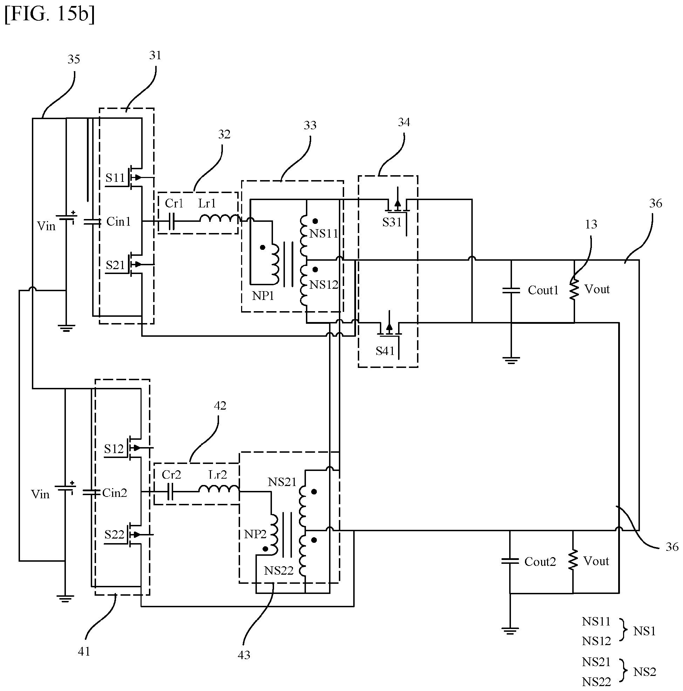

A difference between the converter in the embodiment shown in FIG. 15b and the converter shown in FIG. 15a lies in that the second rectifier circuit 44 in the converter shown in FIG. 15a is removed. Specifically, the converter shown in FIG. 15b includes the input terminal 35, the first input capacitor Cin1, the first inverter circuit 31, the first resonant circuit 32, the first transformer 33, the first rectifier circuit 34, the first output capacitor Cout1, the output terminal 36, the second input capacitor Cin2, the second inverter circuit 41, the second resonant circuit 42, the second transformer 43, and the second output capacitor Cout2.

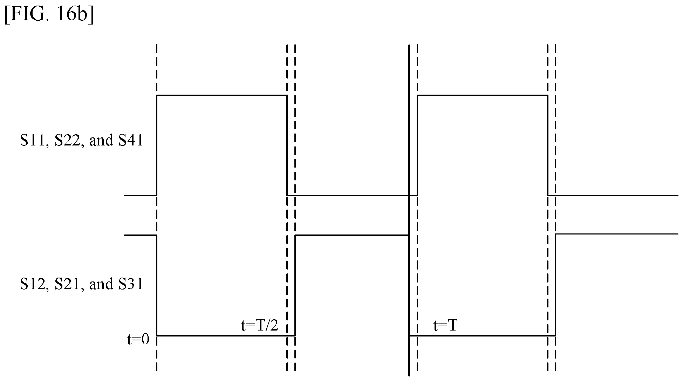

As shown in FIG. 16b, the first switching transistor S11, the second switching transistor S22, and the fourth switching transistor S41 all have the same phase, and the first switching transistor S12, the second switching transistor S21, and the third switching transistor S31 all have the same phase.

Same as the converter shown in FIG. 15a, in the converter shown in FIG. 15b, a connection manner of the first primary-side winding NP1 and the first secondary-side winding NS1 in the first transformer 33 is different from a connection manner of the second primary-side winding NP2 and the second secondary-side winding NS2 in the second transformer 43, and the first inverter circuit 31 and the second inverter circuit 41 have a drive phase difference of 180°. Therefore, a current on the first secondary-side sub-winding NS11 in the first half cycle is

$I_P$, and a current on the first secondary-side sub-winding NS11 in the second half cycle is $(2N_1+N_2)/N_2 \times I_P$. A current on the second secondary-side sub-winding NS12 in the first half cycle is $(2N_1+N_2)/N_2 \times I_P$, and a current on the second secondary-side sub-winding NS12 in the second half cycle is $I_P$. Therefore, in one cycle, valid values of currents on the first secondary-side sub-winding NS11 and the second secondary-side sub-winding NS12 are the same.

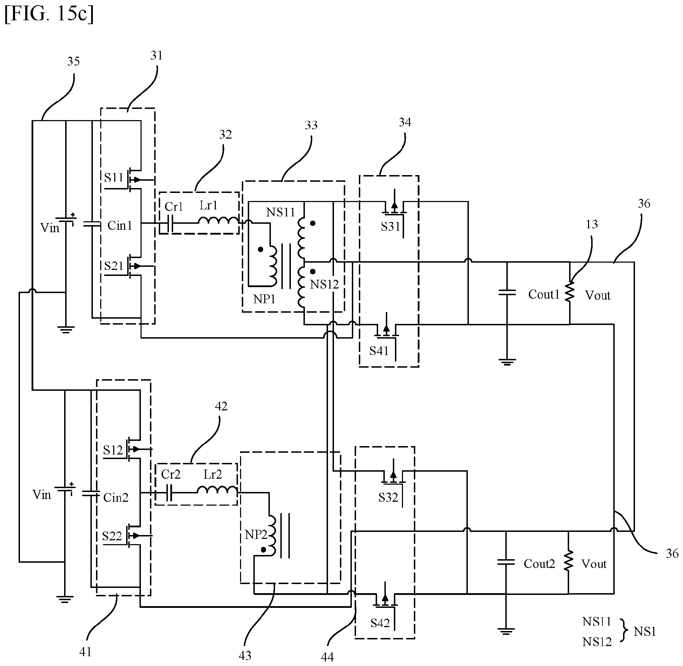

A difference between the converter in the embodiment shown in FIG. 15c and the converter shown in FIG. 15a lies in that the second secondary-side winding NS2 in the converter shown in FIG. 15a is removed. Specifically, as shown in FIG. 15c, the second transformer 43 includes the second primary-side winding NP2, but does not include the second secondary-side winding NS2. An undotted terminal of the second primary-side winding NP2 is connected to the second inductor Lr2, a dotted terminal of the second primary-side winding NP2 is connected to an undotted terminal of the first secondary-side winding NS1 and is connected to the second rectifier circuit 44, and a dotted terminal of the first secondary-side winding NS1 is connected to the second rectifier circuit 44.

Same as the converter shown in FIG. 15a, in the converter shown in FIG. 15c, a connection manner of the first primary-side winding NP1 and the first secondary-side winding NS1 in the first transformer 33 is different from a connection manner of the second primary-side winding NP2 and the first secondary-side winding NS1, and the first inverter circuit 31 and the second inverter circuit 41 have a drive phase difference of 180°. Therefore, a current on the first secondary-side winding NS11 in the first half cycle is $I_P$, and a current on the first secondary-side sub-winding NS11 in the second half cycle is $(2N_1+N_2)/N_2 \times I_P$. A current on the second secondary-side sub-winding NS12 in the first half cycle is $(2N_1+N_2)/N_2 \times I_P$, and a current on the second secondary-side sub-winding NS12 in the second half cycle is $I_P$. Therefore, in one cycle, valid values of currents on the first secondary-side sub-winding NS11 and the second secondary-side sub-winding NS12 are the same.

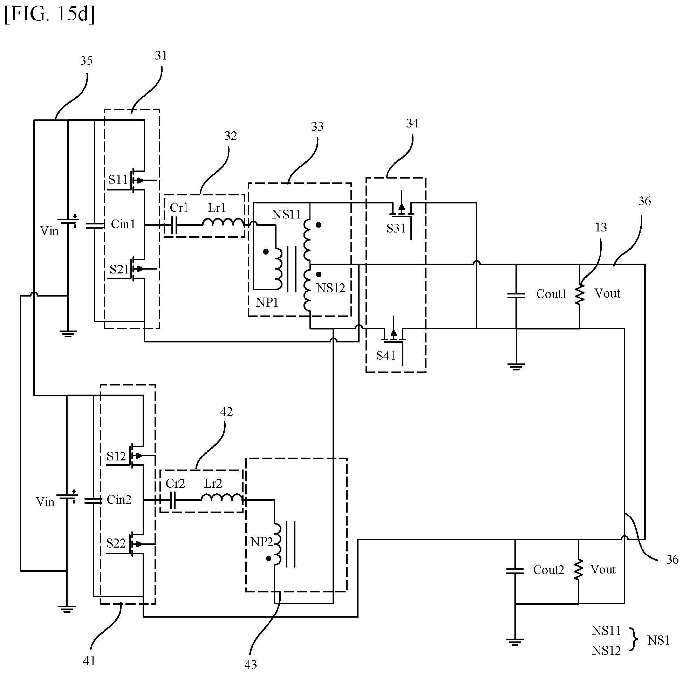

A difference between the converter in the embodiment shown in FIG. 15d and the converter shown in FIG. 15c lies in that the second rectifier circuit 44 in the converter shown in FIG. 15c is removed. Specifically, the converter shown in FIG. 15c includes the input terminal 35, the first input capacitor Cin1, the first inverter circuit 31, the first resonant circuit 32, the first transformer 33, the first rectifier circuit 34, the first output capacitor Cout1, the output terminal 36, the second input capacitor Cin2, the second inverter circuit 41, the second resonant circuit 42, the second transformer 43, and the second output capacitor Cout2.

Same as the converter shown in FIG. 15c, in the converter shown in FIG. 15d, a connection manner of the first primary-side winding NP1 and the first secondary-side winding NS1 in the first transformer 33 is different from a connection manner of the second primary-side winding NP2 and the first secondary-side winding NS1, and the first inverter circuit 31 and the second inverter circuit 41 have a drive phase difference of 180°. Therefore, a current on the first secondary-side winding NS11 in the first half cycle is $I_P$, and a current on the first secondary-side sub-winding NS11 in the second half cycle is $(2N_1+N_2)/N_2 \times I_P$. A current on the second secondary-side sub-winding NS12 in the first half cycle is $(2N_1+N_2)/N_2 \times I_P$, and a current on the second secondary-side sub-winding NS12 in the second half cycle is $I_P$. Therefore, in one cycle, valid values of currents on the first secondary-side sub-winding NS11 and the second secondary-side sub-winding NS12 are the same.

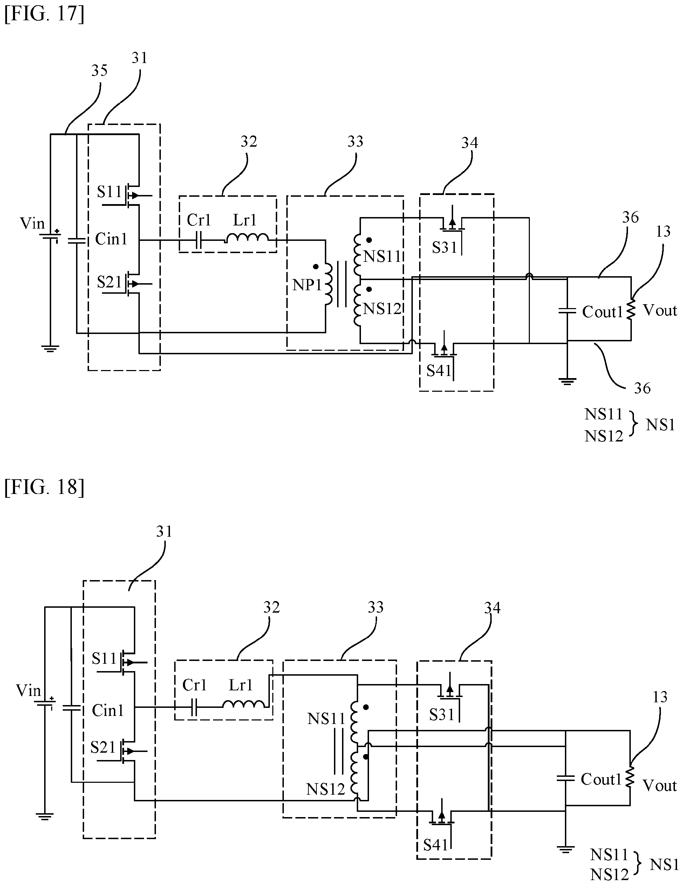

A difference between the embodiment shown in FIG. 17 and the embodiment shown in FIG. 11a lies in a connection position of the undotted terminal of the first primary-side winding NP1. In the embodiment shown in FIG. 11a, the undotted terminal of the first primary-side winding NP1 is connected to the dotted terminal of the first secondary-side winding NS1. In this embodiment, as shown in FIG. 17, the undotted terminal of the first primary-side winding NP1 is connected to the second switching transistor S21 in the first inverter circuit 31. In this way, in a current of the load 13, for a part of the current, a direct current is converted by the first inverter 31 into an alternating current. After the alternating current is processed by the first transformer 33, energy is transferred from the first primary-side winding NP1 to the second secondary-side sub-winding NS12 in the magnetic field coupling manner, and then the alternating current is converted by the first rectifier circuit 34 into a direct current, to supply power to the load. The other part of the current is directly transferred from the second electrode B2 of the second switching transistor S21 to the load 13 through a cable. It can be learned from FIG. 17 that, a voltage calculation formula of the first resonant circuit 32 is: $V_{cr}=N_1/(2 \times N_1+N_2) \times V_{in}$, and a voltage gain calculation formula is: $G=V_{out}/V_{in}=N_2/(2 \times N_1+N_2)$. When a voltage gain is 0.25, a ratio of the quantity of turns of the first primary-side winding NP1 to the quantity of turns of the first secondary-side winding NS1 is: $N_1:N_2=1.5:1$. In the converter shown in FIG. 1a, when the voltage gain is 0.25, a ratio of the quantity of turns of the first primary-side winding NP1 to the quantity of turns of the first secondary-side winding NS1 is: $N_1:N_2=2:1$. It can be learned that, when there is the same first secondary-side winding NS1, the quantity of turns of the first primary-side winding NP1 in the converter in the embodiment shown in FIG. 17 is less than the quantity of turns of the first primary-side winding NP1 in the converter shown in FIG. 1a. Therefore, in the embodiment shown in FIG. 11, the quantity of turns of the first primary-side winding NP1 in the first transformer 33 can be reduced, and a resistance value of the first primary-side winding NP1 can be reduced, to reduce a loss of the first transformer 33 and further improve conversion efficiency of the converter.

A difference between the embodiment shown in FIG. 18 and the embodiment shown in FIG. 11a lies in the quantity of turns of the first primary-side winding NP1. In the embodiment shown in FIG. 11a, the quantity $N_1$ of turns of the first primary-side winding NP1 is greater than 0. As shown in FIG. 18, in this embodiment, the quantity $N_1$ of turns of the first primary-side winding NP1 is equal to 0. To be specific, in this embodiment, the first transformer 33 includes the first secondary-side winding NS1, the first secondary-side winding NS1 includes a first secondary-side sub-winding NS11 and a second secondary-side sub-winding NS12, a dotted terminal of the first secondary-side sub-winding NS11 is connected to the first inductor Lr1 and is connected to the third switching transistor S31 in the first rectifier circuit 34, an undotted terminal of the first secondary-side sub-winding NS11 is connected to a dotted terminal of the second secondary-side sub-winding NS12 and is connected to the output terminal 36, and an undotted terminal of the second secondary-side sub-winding NS12 is connected to the fourth switching transistor S41 in the first rectifier circuit 34. A current of the load 13 includes a current transmitted from the first primary-side winding NP1 to the load 13, a current transmitted from the first inverter circuit 31 to the load 13, and a current that is induced from the first primary-side winding NP1 to the first secondary-side sub-winding NS11 and the second secondary-side sub-winding NS12 and transmitted to the load 13.

As shown in FIG. 12, during driving, the first switching transistor S11 and the fourth switching transistor S41 are turned on simultaneously, or the second switching transistor S21 and the third switching transistor S31 are turned on simultaneously, and a phase difference between a drive signal on the first switching transistor S11 and the fourth switching transistor S41 and a drive signal on the second switching transistor S21 and the third switching transistor S31 is 180°. In other words, in the first half cycle, the first switching transistor S11 and the fourth switching transistor S41 are turned on, and the second switching transistor S21 and the third switching transistor S31 are turned off, and the opposite is true in the second half cycle. Based on a working state in the first half cycle, $V_{in}=V_{cr}+2\times V_{out}$ can be obtained. Based on a working state in the second half cycle, $V_{cr}=V_{out}$ can be obtained. After combination, voltage gain $G=V_{out}/V_{in}=1/3$ can be obtained. It can be learned that, when the quantity of turns of the first primary-side winding NP1 is 0, the voltage gain G is always 1/3.

It should be noted that, in the embodiment shown in FIG. 18, the quantity $N_1$ of turns of the first primary-side winding NP1 is set to 0 based on the embodiment shown in FIG. 11a. In another embodiment, the quantity $N_1$ of turns of the first primary-side winding NP1 may alternatively be set to 0 based on FIG. 11b, FIG. 15a, FIG. 15b, FIG. 15c, or FIG. 15d. In addition, the quantity $N_1$ of turns of the second primary-side winding NP2 may be further set to 0 based on FIG. 15a, FIG. 15b, FIG. 15c, or FIG. 15d.

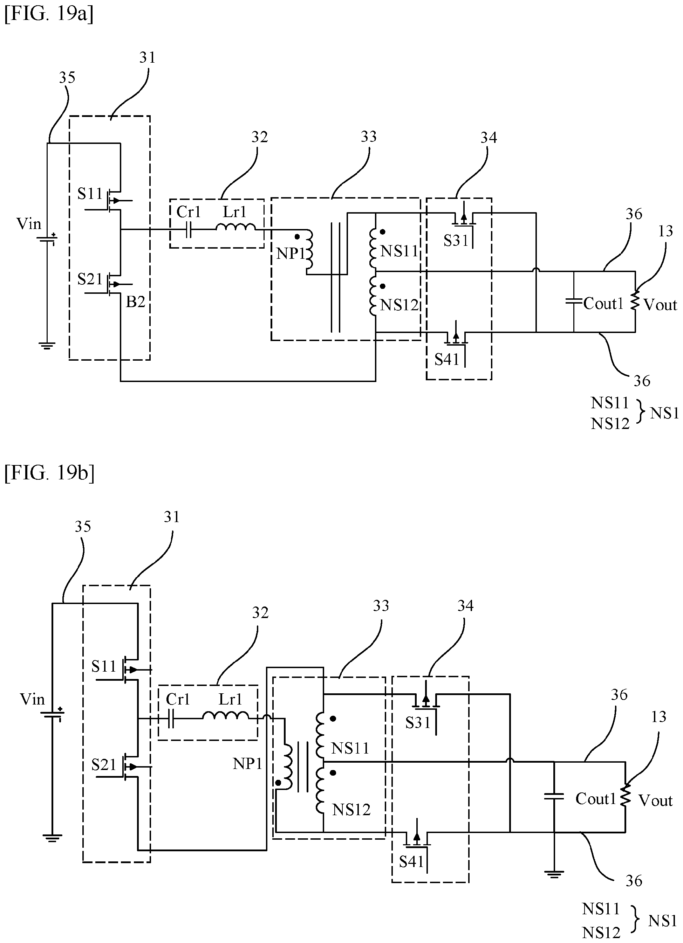

A difference between the embodiment shown in FIG. 19a and the embodiment shown in FIG. 15a lies in that the first input capacitor Cin1 in the converter shown in FIG. 15a is removed, and in FIG. 11a, the second electrode B2 of the second switching transistor S21 in the first inverter circuit 31 is connected to the output terminal 36. In this embodiment, as shown in FIG. 19a, the second electrode B2 of the second switching transistor S21 in the first inverter circuit 31 is connected to the undotted terminal of the first secondary-side winding NS1.

As shown in FIG. 13a and FIG. 13b, the first primary-side winding NP1 and the first secondary-side winding NS1 are connected in two manners. Correspondingly, in this embodiment, the converter may have the two structures shown in FIG. 19a and FIG. 19b.

As shown in FIG. 19a, the dotted terminal of the first primary-side winding NP1 is connected to the first inductor Lr1, the undotted terminal of the first primary-side winding NP1 is connected to the dotted terminal of the first secondary-side sub-winding NS11 and is connected to the first rectifier circuit 34, the undotted terminal of the first secondary-side sub-winding NS11 is connected to the dotted terminal of the second secondary-side sub-winding NS12 and is connected to one terminal of the first output capacitor Coutl, and the undotted terminal of the second secondary-side sub-winding NS12 is connected to the first rectifier circuit 34. The second electrode of the second switching transistor S21 is connected to the undotted terminal of the second secondary-side sub-winding NS12.

As shown in FIG. 19b, the undotted terminal of the first primary-side winding NP1 is connected to the first inductor Lr1, the dotted terminal of the first primary-side winding NP1 is connected to the undotted terminal of the second secondary-side sub-winding NS12 and is connected to the first rectifier circuit 34, the undotted terminal of the first secondary-side sub-winding NS11 is connected to the dotted terminal of the second secondary-side sub-winding NS12 and is connected to one terminal of the first output capacitor Coutl, and the dotted terminal of the first secondary-side sub-winding NS11 is connected to the first rectifier circuit 34. The second electrode of the second switching transistor S21 is connected to the dotted terminal of the first secondary-side sub-winding NS11.

A second voltage calculation formula may be obtained based on a working state of each switching transistor in the second half cycle: $N_1/N_2\times V_{out}+V_{out}$, and further, a voltage gain calculation formula of the converter may be obtained: $G=V_{out}/V_{in}=N_2/(2\times N_1+4\times N_2)$. It can be learned from the voltage gain calculation formula that, a voltage gain G of the converter is related to only the quantity of turns of the first primary-side winding NP1 and the quantity of turns of the second primary-side winding NP2. Therefore, the voltage gain may be changed by changing the quantity $N_1$ of turns of the first primary-side winding NP1 and the quantity $N_2$ of turns of the first secondary-side winding NS1. In addition, it can also be learned from the voltage gain calculation formula that the voltage gain G is unrelated to the current of the load 13, that is, regardless of whether the current of the load 13 increases or decreases, the voltage gain G of the converter remains unchanged. The voltage gain G of the converter may also be referred to as the conversion ratio of the converter.

In the full-bridge LLC converter shown in FIG. 1a, a voltage gain G calculation formula is: $G=N_2/(2\times N_1)$. When the voltage gain G is 0.25, a ratio of the quantity $N_1$ of turns of the first primary-side winding NP1 to the quantity $N_2$ of turns of the first secondary-side sub-winding NS11 in the full-bridge LLC converter shown in FIG. 1a is: $N_1/N_2=2:1$, and a ratio of the quantity $N_1$ of turns of the first primary-side winding NP1 to the quantity $N_2$ of turns of the first secondary-side sub-winding NS11 in the converter in the embodiment shown in FIG. 11a is: $N_1/N_2=0:1$. It can be learned that when there is the same first secondary-side winding NS1, the quantity of turns of the first primary-side winding NP1 in the converter in the embodiment shown in FIG. 19a is less than the quantity of turns of the first primary-side winding NP1 in the converter shown in FIG. 1a. Therefore, in the embodiment shown in FIG. 19a, the quantity of turns of the first primary-side winding NP1 in the first transformer 33 can be reduced, and a resistance value of the first primary-side winding NP1 can be reduced, to reduce a loss of the first transformer 33 and further improve conversion efficiency of the converter.

FIG. 12 is a diagram of a drive waveform of each switching transistor in a converter according to an embodiment. As shown in FIG. 12, in the first half cycle, the first switching transistor S11 and the fourth switching transistor S41 are turned on, and the second switching transistor S21 and the third switching transistor S31 are turned off. As shown in FIG. 14b, in the converter shown in FIG. 11a, in the second half cycle, the first switching transistor S11 and the fourth switching transistor S41 are turned off, and the second switching transistor S21 and the third switching transistor S31 are turned on.

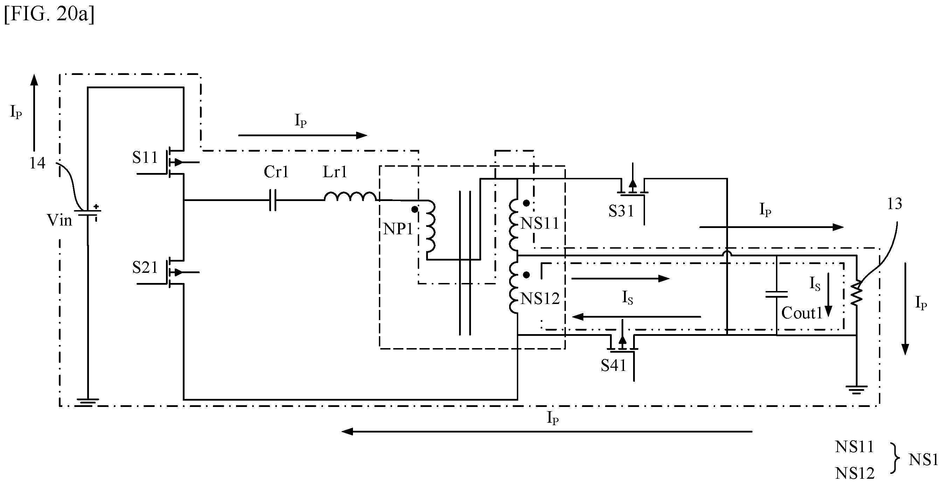

As shown in FIG. 20a, in the first half cycle, a current $I_P$ successively flows through the first switching transistor S11, the first capacitor Cr1, the first inductor Lr1, the dotted terminal of the first primary-side winding NP1, the undotted terminal of the first primary-side winding NP1, the dotted terminal of the first secondary-side sub-winding NS11, the undotted terminal of the first secondary-side sub-winding NS11, the load 13, and a ground terminal, and flows back to the negative electrode of the power supply 14. A current $I_S$ that is induced from the first primary-side winding NP1 to the second secondary-side sub-winding NS12 successively flows through the dotted terminal of the second secondary-side sub-winding NS12, the load 13, and the fourth switching transistor S41, and flows back to the undotted terminal of the second secondary-side sub-winding NS12. Therefore, in the first half cycle, a current on the third switching transistor S31 is 0, and a current on the fourth switching transistor S41 is $I_S$.

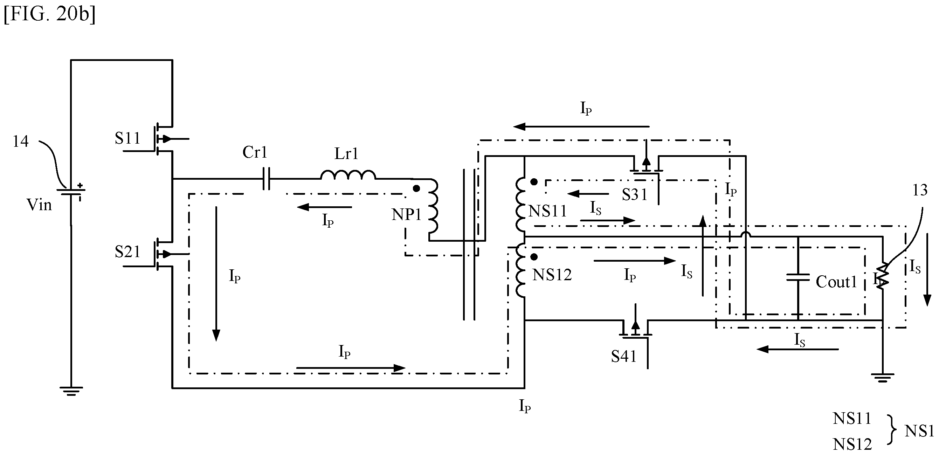

As shown in FIG. 20b, in the second half cycle, a current $I_P$ successively flows through the dotted terminal of the first primary-side winding NP1, the first inductor Lr1, the first capacitor Cr1, the second switching transistor S21, the undotted terminal of the second secondary-side sub-winding NS12, the dotted terminal of the second secondary-side sub-winding NS12, the load 13, the third switching transistor S31, and the dotted terminal of the first secondary-side sub-winding NS11, and flows back to the undotted terminal of the first primary-side winding NP1. The current $I_S$ successively flows through the load 13, the third switching transistor S31, the dotted terminal of the first secondary-side sub-winding NS11, and the undotted terminal of the first secondary-side sub-winding NS11, and flows back to the load 13. Therefore, in the second half cycle, a current on the third switching transistor S31 is $I_S+I_P$, and a current on the fourth switching transistor S41 is 0.

It can be learned from FIG. 20a and FIG. 20b that, in FIG. 19a, in the first half cycle, in a current of the load 13, for a part of the current, a direct current is converted by the first inverter 31 into an alternating current. After the alternating current is processed by the first transformer 33, energy is transferred from the first primary-side winding NP1 to the second secondary-side sub-winding NS12 in the magnetic field coupling manner, and then the alternating current is converted by the first rectifier circuit 34 into a direct current, to supply power to the load 13. The other part of the current is directly transferred from the first primary-side winding NP1 to the first secondary-side sub-winding NS11 through a connection cable between the first primary-side winding NP1 and the first secondary-side sub-winding NS11. In a second half cycle, in a current of the load 13, for a part of the current, a direct current is converted by the first inverter 31 into an alternating current. After the alternating current is processed by the first transformer 33, energy is transferred from the first primary-side winding NP1 to the first secondary-side sub-winding NS11 in the magnetic field coupling manner, and then the alternating current is converted by the first rectifier circuit 34 into a direct current, to supply power to the load 13. The other part of the current is directly transferred from the second electrode B2 of the second switching transistor S21 to the second secondary-side sub-winding NS12 through a cable. Therefore, the first transformer 33 does not need to process the part of the current that is directly transferred from the first primary-side winding NP1 to the first secondary-side sub-winding NS11 and the part of the current that is directly transferred from the second electrode B2 of the second switching transistor S21 to the load 13, to reduce a power that needs to be processed by the first transformer 33, and improve conversion efficiency of the converter.

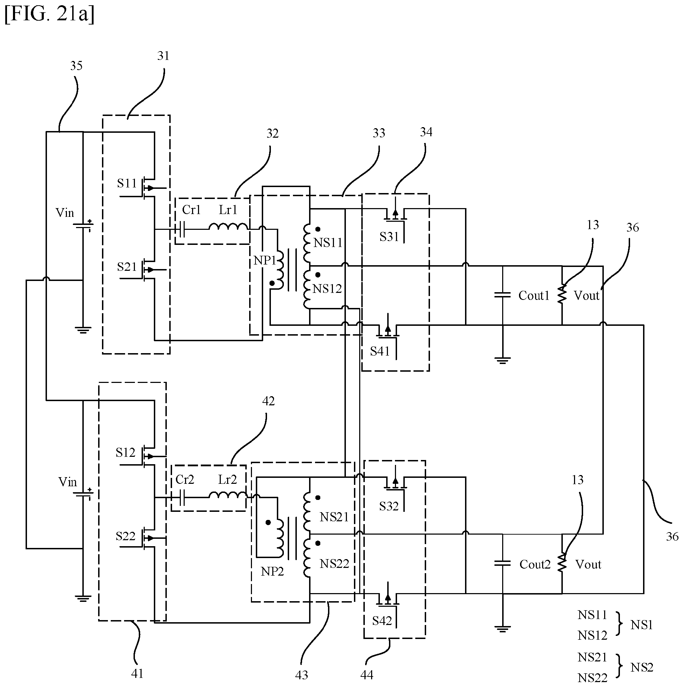

In addition, it can be learned from FIG. 20a and FIG. 20b that, in one cycle, valid values of currents on the third switching transistor S31 are different. In view of this, as shown in FIG. 21a, the converter shown in FIG. 19a and the converter shown in FIG. 19b may be connected in parallel to form a converter, to resolve a problem that valid values of currents are different.

As shown in FIG. 21a, the converter includes an input terminal 35, a first inverter circuit 31, a first resonant circuit 32, a first transformer 33, a first rectifier circuit 34, a first output capacitor Coutl, an output terminal 36, a second inverter circuit 41, a second resonant circuit 42, a second transformer 43, a second rectifier circuit 44, and a second output capacitor Cout2. Both the first input capacitor Cin1 and the second input capacitor Cin2 are connected to the input terminal 35. Both the first rectifier circuit 34 and the second rectifier circuit 44 are connected to the output terminal 36. Because the converter shown in FIG. 19a has the two output terminals 36, and the converter shown in FIG. 4b has the two output terminals 36, the first rectifier circuit 34 and the second rectifier circuit 44 are respectively connected to the two output terminals 36. For example, a fifth switching transistor S51 in the first rectifier circuit 34 and a fifth switching transistor S52 in the second rectifier circuit 44 are connected and connected to one output terminal 36, and a sixth switching transistor S61 in the first rectifier circuit 34 and a sixth switching transistor S62 in the second rectifier circuit 44 are connected and connected to another output terminal 36.

As shown in FIG. 21a, a second secondary-side winding NS2 in the second transformer 43 and a first secondary-side winding NS1 in the first transformer 33 are connected in parallel, that is, a dotted terminal of the first secondary-side winding NS1 is connected to a dotted terminal of the second secondary-side winding NS2, and an undotted terminal of the first secondary-side winding NS1 is connected to an undotted terminal of the second secondary-side winding NS2. In other words, a dotted terminal of the first secondary-side sub-winding NS11 is connected to a dotted terminal of the second secondary-side sub-winding NS12, and an undotted terminal of the first secondary-side sub-winding NS11 is connected to an undotted terminal of the second secondary-side sub-winding NS12.

A difference between the converter shown in FIG. 19a and the converter shown in FIG. 19b lies in that the first primary-side winding NP1 and the first secondary-side winding NS1 are connected in different manners. For example, the converter shown in FIG. 19a uses the connection manner shown in FIG. 13a, and the converter shown in FIG. 19b uses the connection manner shown in FIG. 13b. To be specific, the connection manner of the first primary-side winding NP1 and the first secondary-side winding NS1 in the first transformer 33 in the converter shown in FIG. 21a is different from the connection manner of the second primary-side winding NP2 and the second secondary-side winding NS2 in the second transformer 43.

The first inverter circuit 31 and the second inverter circuit 41 have a drive phase difference of 180°. As shown in FIG. 16a, a first switching transistor S11 of the first inverter circuit 31 and a second switching transistor S22 of the second inverter circuit 41 have a same phase, a second switching transistor S21 of the first inverter circuit 31 and a first switching transistor S12 of the second inverter circuit 41 have a same phase, the first switching transistor S11 and the second switching transistor S21 of the first inverter circuit 31 have a phase difference of 180°, and the first switching transistor S12 and the second switching transistor S22 of the second inverter circuit 41 have a phase difference of 180°.

As shown in FIG. 19a, because the undotted terminal of the first primary-side winding NP1 is connected to the dotted terminal of the first secondary-side sub-winding NS11, in the first half cycle, a current on the third switching transistor S31 is 0, and a current on the fourth switching transistor S41 is $I_S$; and in the second half cycle, a current on the third switching transistor S31 is $I_S+I_P$, and a current on the fourth switching transistor S41 is 0. As shown in FIG. 19b, because the dotted terminal of the first primary-side winding NP1 is connected to the undotted terminal of the second secondary-side sub-winding NS12, in the first half cycle, a current on the third switching transistor S31 is 0, and a current on the fourth switching transistor S41 is $I_S+I_P$, and in the second half cycle, a current on the third switching transistor S31 is $I_S$, and a current on the fourth switching transistor S41 is 0. The converter shown in FIG. 21a is formed by the parallel connection of the converters shown in FIG. 19a and FIG. 19b. Therefore, in the first half cycle and the second half cycle, the currents on the third switching transistor S31 and the fourth switching transistor S41 in the first rectifier circuit 34 are evenly distributed, and the currents on the third switching transistor S32 and the fourth switching transistor S42 in the second rectifier circuit 44 are also evenly distributed. Therefore, in the first half cycle, the current on the third switching transistor S31 is 0, and the current on the fourth switching transistor S41 is $(I_S+I_S+I_P)/2$. In the second half cycle, the current on the third switching transistor S31 is $(I_S+I_S+I_P)/2$, and the current on the fourth switching transistor S41 is 0. In this way, in one cycle, equivalent currents on the third switching transistor S31 and the fourth switching transistor S41 are the same.

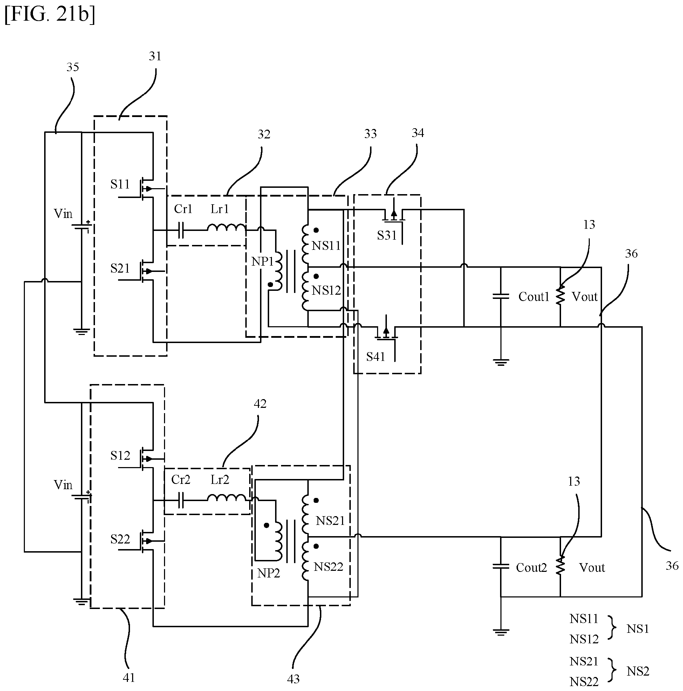

A difference between the converter in the embodiment shown in FIG. 21b and the converter shown in FIG. 21a lies in that the second rectifier circuit 44 in the converter shown in FIG. 21a is removed. Specifically, the converter shown in FIG. 21b includes the input terminal 35, the first inverter circuit 31, the first resonant circuit 32, the first transformer 33, the first rectifier circuit 34, the first output capacitor Coutl, the output terminal 36, the second inverter circuit 41, the second resonant circuit 42, the second transformer 43, and the second output capacitor Cout2.

Same as the converter shown in FIG. 21a, in the converter shown in FIG. 21b, a connection manner of the first primary-side winding NP1 and the first secondary-side winding NS1 in the first transformer 33 is different from a connection manner of the second primary-side winding NP2 and the second secondary-side winding NS2 in the second transformer 43, and the first inverter circuit 31 and the second inverter circuit 41 have a drive phase difference of 180°. Therefore, in the first half cycle, a current on the third switching transistor S31 is 0, and a current on the fourth switching transistor S41 is $(I_S+I_S+I_P)/2$. In the second half cycle, a current on the third switching transistor S31 is $(I_S+I_S+I_P)/2$, and a current on the fourth switching transistor S41 is 0. In this way, in one cycle, equivalent currents on the third switching transistor S31 and the fourth switching transistor S41 are the same.

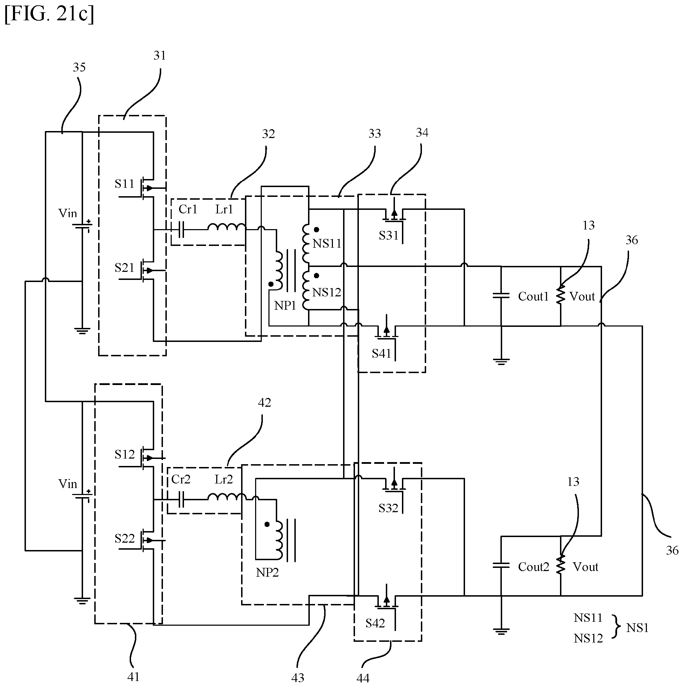

A difference between the converter in the embodiment shown in FIG. 21c and the converter shown in FIG. 21a lies in that the second secondary-side winding NS2 in the converter shown in FIG. 21a is removed. Specifically, as shown in FIG. 21c, the second transformer 43 includes the second primary-side winding NP2, but does not include the second secondary-side winding NS2. An undotted terminal of the second primary-side winding NP2 is connected to the second inductor Lr2, a dotted terminal of the second primary-side winding NP2 is connected to an undotted terminal of the first secondary-side winding NS1 and is connected to the second rectifier circuit 44, and a dotted terminal of the first secondary-side winding NS1 is connected to the second rectifier circuit 44.

Same as the converter shown in FIG. 21a, in the converter shown in FIG. 21c, a connection manner of the first primary-side winding NP1 and the first secondary-side winding NS1 in the first transformer 33 is different from a connection manner of the second primary-side winding NP2 and the first secondary-side winding NS1, and the first inverter circuit 31 and the second inverter circuit 41 have a drive phase difference of 180°. Therefore, in the first half cycle, a current on the third switching transistor S31 is 0, and a current on the fourth switching transistor S41 is $(I_S+I_S+I_P)/2$. In the second half cycle, a current on the third switching transistor S31 is $(I_S+I_S+I_P)/2$, and a current on the fourth switching transistor S41 is 0. In this way, in one cycle, equivalent currents on the third switching transistor S31 and the fourth switching transistor S41 are the same.

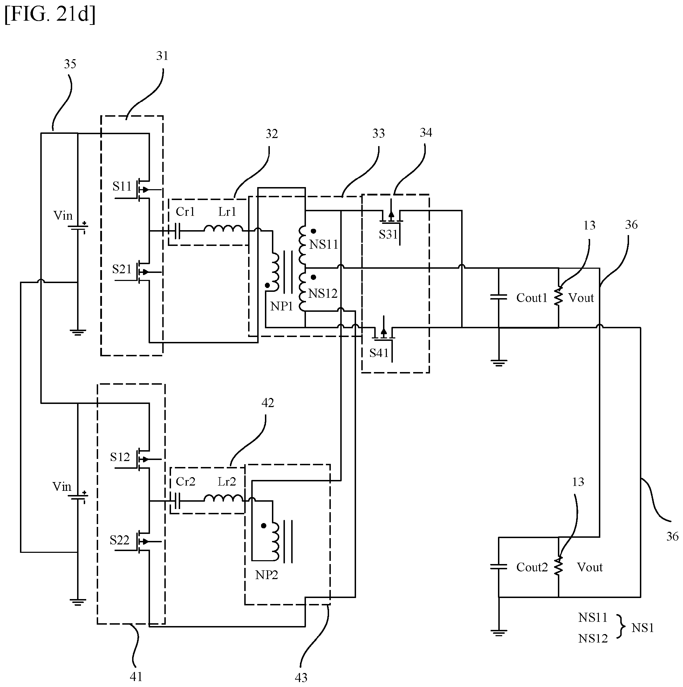

A difference between the converter in the embodiment shown in FIG. 21d and the converter shown in FIG. 21c lies in that, as shown in FIG. 21d, in this embodiment, the second rectifier circuit 44 in the converter shown in FIG. 21c is removed. Specifically, the converter shown in FIG. 21c includes the input terminal 35, the first inverter circuit 31, the first resonant circuit 32, the first transformer 33, the first rectifier circuit 34, the first output capacitor Coutl, the output terminal 36, the second inverter circuit 41, the second resonant circuit 42, the second transformer 43, and the second output capacitor Cout2.

Same as the converter shown in FIG. 21c, in the converter shown in FIG. 21d, a connection manner of the first primary-side winding NP1 and the first secondary-side winding NS1 in the first transformer 33 is different from a connection manner of the second primary-side winding NP2 and the first secondary-side winding NS1, and the first inverter circuit 31 and the second inverter circuit 41 have a drive phase difference of 180°. Therefore, in the first half cycle, a current on the third switching transistor S31 is 0, and a current on the fourth switching transistor S41 is $(I_S+I_S+I_P)/2$. In the second half cycle, a current on the third switching transistor S31 is $(I_S+I_S+I_P)/2$, and a current on the fourth switching transistor S41 is 0. In this way, in one cycle, equivalent currents on the third switching transistor S31 and the fourth switching transistor S41 are the same.

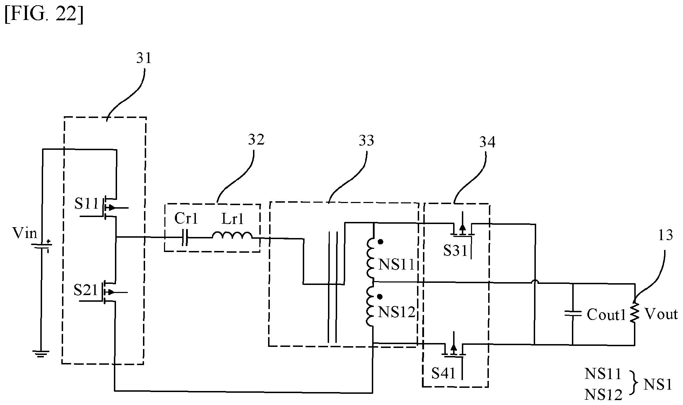

A difference between the embodiment shown in FIG. 22 and the embodiment shown in FIG. 19a lies in the quantity of turns of the first primary-side winding NP1. In the embodiment shown in FIG. 19a, the quantity $N_1$ of turns of the first primary-side winding NP1 is greater than 0. As shown in FIG. 22, in this embodiment, the quantity $N_1$ of turns of the first primary-side winding NP1 is 0. To be specific, in this embodiment, the first transformer 33 includes the first secondary-side winding NS1, the first secondary-side winding NS1 includes a first secondary-side sub-winding NS11 and a second secondary-side sub-winding NS12, a dotted terminal of the first secondary-side sub-winding NS11 is connected to the first inductor Lr1 and is connected to the first rectifier circuit 34, an undotted terminal of the first secondary-side sub-winding NS11 is connected to a dotted terminal of the second secondary-side sub-winding NS12 and is connected to the output terminal 36, and an undotted terminal of the second secondary-side sub-winding NS12 is connected to the first rectifier circuit 34. In the first half cycle, in a current of the load 13, for a part of the current, a direct current is converted by the first inverter 31 into an alternating current. After the alternating current is processed by the first transformer 33, energy is transferred from the first primary-side winding NP1 to the second secondary-side sub-winding NS12 in the magnetic field coupling manner, and then the alternating current is converted by the first rectifier circuit 34 into a direct current, to supply power to the load 13. The other part of the current is directly transferred from the first primary-side winding NP1 to the first secondary-side sub-winding NS11 through a connection cable between the first primary-side winding NP1 and the first secondary-side sub-winding NS11. In a second half cycle, in a current of the load 13, for a part of the current, a direct current is converted by the first inverter 31 into an alternating current. After the alternating current is processed by the first transformer 33, energy is transferred from the first primary-side winding NP1 to the first secondary-side sub-winding NS11 in the magnetic field coupling manner, and then the alternating current is converted by the first rectifier circuit 34 into a direct current, to supply power to the load 13. The other part of the current is directly transferred from the second electrode B2 of the second switching transistor S21 to the second secondary-side sub-winding NS12 through a cable.

As shown in FIG. 12, during driving, the first switching transistor S11 and the fourth switching transistor S41 are turned on simultaneously, or the second switching transistor S21 and the third switching transistor S31 are turned on simultaneously, and a phase difference between a drive signal on the first switching transistor S11 and the fourth switching transistor S41 and a drive signal on the second switching transistor S21 and the third switching transistor S31 is 180°. In other words, in the first half cycle, the first switching transistor S11 and the fourth switching transistor S41 are turned on, and the second switching transistor S21 and the third switching transistor S31 are turned off, and the opposite is true in the second half cycle. Based on a working state in the first half cycle, $V_{in}=V_{cr}+2\times V_{out}$ can be obtained. Based on a working state in the second half cycle, $V_{cr}=V_{out}$ can be obtained. After combination, voltage gain $G=V_{out}/V_{in}=1/3$ can be obtained. It can be learned that, when the quantity of turns of the first primary-side winding NP1 is 0, the voltage gain is always 1/3.

It should be noted that, in the embodiment shown in FIG. 22, the quantity $N_1$ of turns of the first primary-side winding NP1 is set to 0 based on the embodiment shown in FIG. 19a. In another embodiment, the quantity $N_1$ of turns of the first primary-side winding NP1 may alternatively be set to 0 based on FIG. 19b, FIG. 21a, FIG. 21b, FIG. 21c, or FIG. 21d. In addition, the quantity $N_1$ of turns of the second primary-side winding NP2 may be further set to 0 based on FIG. 21a, FIG. 21b, FIG. 21c, or FIG. 21d.

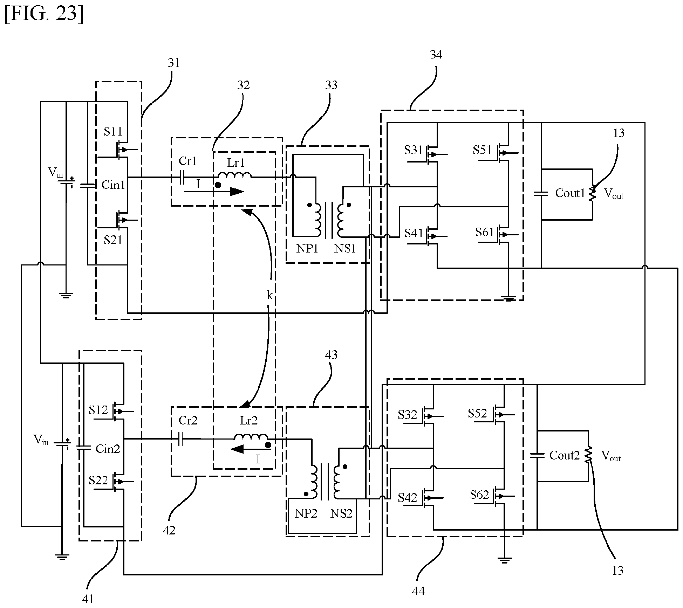

A difference between the embodiment shown in FIG. 23 and the embodiment shown in FIG. 8a lies in that, in the embodiment shown in FIG. 8a, the first inductor Lr1 and the second inductor Lr2 are not coupled, and in the embodiment shown in FIG. 23, the first inductor Lr1 and the second inductor Lr2 are positively coupled. For example, a dotted terminal of the first inductor Lr1 is connected to the first capacitor Cr1, an undotted terminal of the first inductor Lr1 is connected to the first primary -side winding NP1, a dotted terminal of the second inductor Lr2 is connected to the second primary-side winding NP2, and an undotted terminal of the second inductor Lr2 is connected to the second capacitor Cr2. When a current flowing through the first inductor Lr1 enters from the dotted terminal of the first inductor Lr1, a current flowing through the second inductor Lr2 also enters from the dotted terminal of the second inductor Lr2. During specific implementation, both the first inductor Lr1 and the second inductor Lr2 are wound on a same core cylinder, and a winding direction of the first inductor Lr1 is the same as a winding direction of the second inductor Lr2. A coupling coefficient between the first inductor Lr1 and the second inductor Lr2 is k, where $0<k\leq1$. During actual application, both the first inductor Lr1 and the second inductor Lr2 have a processing error, and the first capacitor Cr1 and the second capacitor Cr2 also have a processing error. In this way, a current on the first resonant circuit 32 is different from a current on the second resonant circuit 42, that is, a problem of two-phase current imbalance occurs. For example, a processing error of the first inductor Lr1 and the second inductor Lr2 is $\pm10\%$, and a processing error of the first capacitor Cr1 and the second capacitor Cr2 is $\pm5\%$. When the processing error of the first inductor Lr1 is 10%, the processing error of the second inductor Lr2 is -10%, the processing error of the first capacitor Cr1 is 5%, and the processing error of the second capacitor Cr2 is -5%, two-phase current imbalance reaches 50%. When the first inductor Lr1 is positively coupled to the second inductor Lr2, mutual inductance can be generated between the first inductor Lr1 and the second inductor Lr2, so that two-phase current imbalance can be well controlled. For example, when the coupling coefficient $k\approx1$, two-phase current imbalance may be controlled within 10%.

It should be noted that, in the embodiment shown in FIG. 23, the converter is obtained by connecting the converter shown in FIG. 4a and the converter shown in FIG. 4b in parallel, and may be obtained by connecting a plurality of converters in parallel in another embodiment, and a quantity of converters connected in parallel is greater than 2. In this case, first inductors Lr1 of every two first resonant circuits 32 are positively coupled.

In addition, the first inductor Lr1 may alternatively be positively coupled to the second inductor Lr2 based on the embodiments shown in FIG. 8b to FIG. 8d, FIG. 15a to FIG. 15d, and FIG. 21a to FIG. 21d.

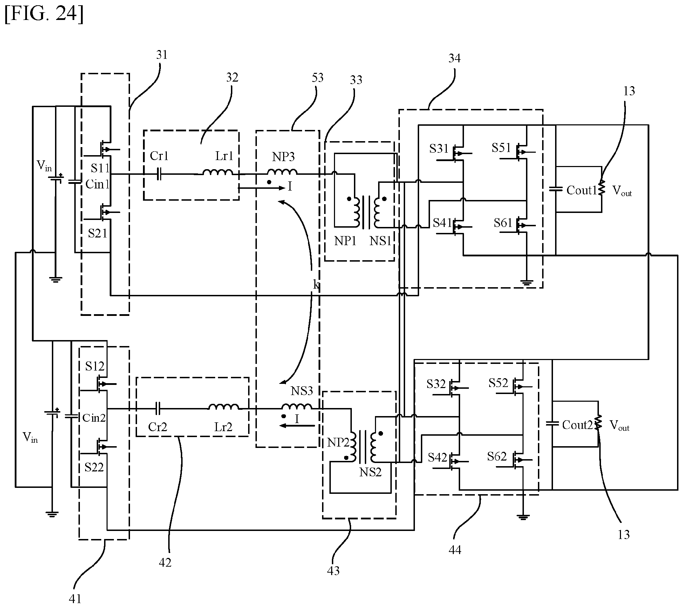

A difference between the embodiment shown in FIG. 24 and the embodiment shown in FIG. 8a lies in that a third transformer 53 is added based on the embodiment shown in FIG. 8a. As shown in FIG. 24, in this embodiment, the third transformer 53 includes a third primary-side winding NP3 and a third secondary-side winding NS3, a dotted terminal of the third primary-side winding NP3 is connected to the first inductor Lr1, an undotted terminal of the third primary-side winding NP3 is connected to the dotted terminal of the first primary-side winding NP1, an undotted terminal of the third secondary-side winding NS3 is connected to the second inductor Lr2, and an undotted terminal of the third secondary-side winding NS3 is connected to the undotted terminal of the second primary-side winding NP2. The third primary-side winding NP3 is negatively coupled to the third secondary-side winding NS3. When a current flowing through the third primary-side winding NP3 flows from the dotted terminal of the third primary-side winding NP3, and a current flowing through the third secondary-side winding NS3 is connected to the undotted terminal of the third secondary-side winding NS3. During specific implementation, the third primary-side winding NP3 and the third secondary-side winding NS3 are wound on a same core cylinder, and a winding direction of the third primary-side winding NP3 is opposite to a winding direction of the third secondary-side winding NS3.

A coupling coefficient between the third primary-side winding NP3 and the third secondary-side winding NS3 is k, where 0<k≤1. If k=1, the first inductor Lr1 and the second inductor Lr2 are external inductors, and are respectively resonant with the first capacitor Cr1 and the second capacitor Cr2. If k<1, in a possible case, the first inductor Lr1 and the second inductor Lr2 are transformer leakage inductors, and are respectively resonant with the first capacitor Cr1 and the second capacitor Cr2. In another possible case, the first inductor Lr1 and the second inductor Lr2 are transformer leakage inductors, are also external inductors, and are respectively resonant with the first capacitor Cr1 and the second capacitor Cr2. Because the third primary -side winding NP3 is negatively coupled to the third secondary-side winding NS3, a current on the third primary-side winding NP3 is fed back to the third secondary-side winding NS3, and the third secondary-side winding NS3 may perform adjustment based on the current on the third primary-side winding NP3. The third secondary-side winding NS3 also feeds back a current on the third secondary-side winding NS3 to the third primary-side winding NP3, and the third primary-side winding NP3 may perform adjustment based on the current on the third secondary-side winding NS3. In this way, the current on the third primary-side winding NP3 is closer to the current on the third secondary-side winding NS3, and the problem of two-phase current imbalance can be better resolved. For example, when the coupling coefficient k≈1, two-phase current imbalance may be controlled within 10%.

In addition, the third transformer 53 in this embodiment may alternatively be added based on the embodiments shown in FIG. 8b to FIG. 8d, FIG. 15a to FIG. 15d, and FIG. 21a to FIG. 21d.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

**Claims**

1. A converter, comprising: an input terminal, a first inverter circuit, a first transformer, a first rectifier circuit, and an output terminal, wherein the first transformer comprises a first primary-side winding and a first secondary-side winding;

   the input terminal is connected to a first terminal of the first inverter circuit, a second terminal of the first inverter circuit is connected to the first primary-side winding, and the first rectifier circuit is connected between the first secondary-side winding and the output terminal; and

   a third terminal of the first inverter circuit is connected to the output terminal; or
   a third terminal of the first inverter circuit is connected to the first secondary-side winding.

2. The converter according to claim 1, wherein the second terminal of the first inverter circuit is connected to a first terminal of the first primary-side winding, a second terminal of the first primary-side winding is connected to a first terminal of the first secondary-side winding and is connected to the first rectifier circuit, and a second terminal of the first secondary-side winding is connected to the first rectifier circuit.

3. The converter according to claim 2, wherein the first terminal of the first primary-side winding and the first terminal of the first secondary-side winding are mutually dotted terminals, and the second terminal of the first primary-side winding and the second terminal of the first secondary-side winding are mutually dotted terminals.

4. The converter according to claim 2 or 3, wherein the third terminal of the first inverter circuit is connected to the second terminal of the first secondary-side winding.

5. The converter according to any one of claims 2 to 4, wherein the first secondary-side winding comprises a first secondary-side sub-winding and a second secondary-side sub-winding that are connected in series, a first terminal of the first secondary-side sub-winding is the first terminal of the first secondary-side winding, a second terminal of the first secondary-side sub-winding is connected to a first terminal of the second secondary-side sub-winding and is connected to the output terminal, and a second terminal of the second secondary-side sub-winding is the second terminal of the first secondary-side winding.

6. The converter according to claim 5, wherein a quantity of turns of the first secondary-side sub-winding is the same as a quantity of turns of the second secondary-side sub-winding.

7. The converter according to any one of claims 2 to 6, wherein the converter further comprises a second inverter circuit and a second transformer, the second transformer comprises a second primary-side winding and a second secondary-side winding, a first terminal of the second primary-side winding is connected to a second terminal of the second secondary-side winding, and the second secondary-side winding and the first secondary-side winding are connected in parallel;

   the input terminal is connected to a first terminal of the second inverter circuit, and a second terminal of the second inverter circuit is connected to a second terminal of the second primary-side winding; and

a third terminal of the second inverter circuit is connected to the output terminal, or a third terminal of the second inverter circuit is connected to a first terminal of the second secondary-side winding.

8. The converter according to claim 7, wherein the converter further comprises a second rectifier circuit, the second rectifier circuit is connected between the second transformer and the output terminal, and the second rectifier circuit and the first rectifier circuit are connected in parallel.

9. The converter according to any one of claims 2 to 6, wherein the converter further comprises a second inverter circuit and a second transformer, the second transformer comprises a second primary-side winding, and a first terminal of the second primary-side winding is connected to the second terminal of the first secondary-side winding,

the input terminal is connected to a first terminal of the second inverter circuit, and a second terminal of the second inverter circuit is connected to a second terminal of the second primary-side winding; and
a third terminal of the second inverter circuit is connected to the output terminal, or a third terminal of the second inverter circuit is connected to the first terminal of the first secondary-side winding.

10. The converter according to claim 9, wherein the converter further comprises a second rectifier circuit, the second rectifier circuit is separately connected to the first terminal of the second primary-side winding and the first terminal of the first secondary-side winding, the second rectifier circuit is further connected to the output terminal, and the second rectifier circuit and the first rectifier circuit are connected in parallel.

11. The converter according to claim 7 or 8, wherein the second secondary-side winding comprises a third secondary-side sub-winding and a fourth secondary-side sub-winding that are connected in series, a first terminal of the third secondary-side sub-winding is the first terminal of the second secondary-side winding, a second terminal of the third secondary-side sub-winding is connected to a first terminal of the fourth secondary-side sub-winding and is connected to the output terminal, and a second terminal of the fourth secondary-side sub-winding is the second terminal of the second secondary-side winding.

12. The converter according to claim 11, wherein a quantity of turns of the third secondary-side sub-winding is the same as a quantity of turns of the fourth secondary-side sub-winding.

13. The converter according to claim 8 or 10, wherein the converter further comprises a first resonant circuit and a second resonant circuit, the first resonant circuit is connected between the first inverter circuit and the first rectifier circuit, and the second resonant circuit is connected between the second inverter circuit and the second rectifier circuit; and

the first resonant circuit comprises a first capacitor and a first inductor that are connected in series, the second resonant circuit comprises a second capacitor and a second inductor that are connected in series, and the first inductor is positively coupled to the second inductor.

14. The converter according to claim 8, 10, or 13, wherein the converter further comprises a third transformer, the third transformer comprises a third primary-side winding and a third secondary-side winding, the third primary-side winding is negatively coupled to the third secondary-side winding, the third primary-side winding is connected between the first inverter circuit and the first rectifier circuit, and the third secondary-side winding is connected between the second inverter circuit and the second rectifier circuit.

15. The converter according to any one of claims 1 to 14, wherein a quantity of turns of the first primary-side winding is greater than or equal to 0.

16. An electronic device, comprising the converter according to any one of claims 1 to 15.

[FIG. 1a]

[FIG. 1b]

[FIG. 2]

[FIG. 3]

[FIG. 4a]

[FIG. 4b]

[FIG. 5]

S11, S31, and S61

S21, S41, and S51

t=0    t=T/2    t=T

[FIG. 6a]

NP1         NS1

[FIG. 6b]

NP1         NS1

[FIG. 7a]

EP 4 521 623 A1

[FIG. 7b]

[FIG. 8a]

[FIG. 8b]

[FIG. 8c]

[FIG. 8d]

[FIG. 9a]

S11, S22, S31,
S61, S32, and S62

S21, S12, S41,
S51, S42, and S52

t=0    t=T/2    t=T

[FIG. 9b]

S11, S22, S31,
and S61

S21, S12, S41,
and S51

t=0    t=T/2    t=T

[FIG. 10]

[FIG. 11a]

NS11 } NS1
NS12

[FIG. 11b]

[FIG. 12]

[FIG. 13a]

NS11

NP1

NS12

NS11 ⎱
NS12 ⎰ NS1

[FIG. 13b]

NS11

NP1

NS11

NS12

NS12

NS11 ⎱
NS12 ⎰ NS1

[FIG. 14a]

[FIG. 15a]

[FIG. 15b]

[FIG. 15c]

[FIG. 15d]

[FIG. 16a]

S11, S22, S41,
and S42

S12, S21, S31,
and S32

t=0          t=T/2        t=T

[FIG. 16b]

S11, S22, and S41

S12, S21, and S31

t=0    t=T/2    t=T

[FIG. 17]

[FIG. 18]

[FIG. 19a]

[FIG. 19b]

[FIG. 20a]

EP 4 521 623 A1

[FIG. 20b]

[FIG. 21a]

[FIG. 21b]

[FIG. 21c]

[FIG. 21d]

[FIG. 22]

[FIG. 23]

[FIG. 24]

## INTERNATIONAL SEARCH REPORT

| International application No. |
| --- |
| **PCT/CN2023/094248** |

**A.     CLASSIFICATION OF SUBJECT MATTER**

H02M 3/335(2006.01)i;  H02M3/28(2006.01)i

According to International Patent Classification (IPC) or to both national classification and IPC

**B.     FIELDS SEARCHED**

Minimum documentation searched (classification system followed by classification symbols)

IPC: H02M

Documentation searched other than minimum documentation to the extent that such documents are included in the fields searched

Electronic data base consulted during the international search (name of data base and, where practicable, search terms used)

VEN, CNTXT, CNABS, WOTXT, EPTXT, USTXT, CNKI, IEEE: 变换器, 逆变, 整流, 变压器, 原边, 副边, 损耗, 匝数, converter, bridge, transformer, winding, side, loss

**C.     DOCUMENTS CONSIDERED TO BE RELEVANT**

| Category* | Citation of document, with indication, where appropriate, of the relevant passages | Relevant to claim No. |
| --- | --- | --- |
| A | CN 112134463 A (HANGZHOU ZHONGHENG ELECTRIC CO., LTD.) 25 December 2020 (2020-12-25)<br>    description, paragraphs [0025]-[0054], and figures 1-2 | 1-16 |
| A | CN 103248232 A (NANJING UNIVERSITY OF AERONAUTICS AND ASTRONAUTICS) 14 August 2013 (2013-08-14)<br>    entire document | 1-16 |
| A | CN 104753152 A (SOUTHEAST UNIVERSITY) 01 July 2015 (2015-07-01)<br>    entire document | 1-16 |
| A | CN 106533178 A (ZTE CORP.) 22 March 2017 (2017-03-22)<br>    entire document | 1-16 |
| A | CN 206602458 U (SHENZHEN HAOWEN ELECTRONICS CO., LTD.) 31 October 2017 (2017-10-31)<br>    entire document | 1-16 |
| A | US 2020204079 A1 (DELTA ELECTRONICS, INC.) 25 June 2020 (2020-06-25)<br>    entire document | 1-16 |

☐ Further documents are listed in the continuation of Box C.          ☑ See patent family annex.

| | |
| --- | --- |
| *      Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **19 June 2023** | **23 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/094248**

| Patent document cited in search report | | | Publication date (day/month/year) | Patent family member(s) | | | Publication date (day/month/year) |
|---|---|---|---|---|---|---|---|
| CN | 112134463 | A | 25 December 2020 | WO | 2022041589 | A1 | 03 March 2022 |
| | | | | CN | 112134463 | B | 03 June 2022 |
| CN | 103248232 | A | 14 August 2013 | CN | 103248232 | B | 15 April 2015 |
| CN | 104753152 | A | 01 July 2015 | CN | 104753152 | B | 08 March 2017 |
| CN | 106533178 | A | 22 March 2017 | WO | 2016177194 | A1 | 10 November 2016 |
| | | | | CN | 106533178 | B | 30 June 2020 |
| CN | 206602458 | U | 31 October 2017 | | None | | |
| US | 2020204079 | A1 | 25 June 2020 | US | 11031871 | B2 | 08 June 2021 |
| | | | | EP | 3675340 | A1 | 01 July 2020 |
| | | | | CN | 111342661 | A | 26 June 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210631000